# EUROPÄISCHE PATENTSCHRIFT

(11) **EP 3 065 884 B1**
(45) Veröffentlichungstag und Bekanntmachung des Hinweises auf die Patenterteilung: **26.12.2018**
(21) Anmeldenummer: 14798772.1
(22) Anmeldetag: 07.11.2014
(51) Int. Cl.: B05D 7/14, C09D 5/08, C09D 183/04, C09D 183/06, C08G 77/04, C08G 77/18

(54) **KORROSIONSSCHUTZSCHICHT UND VERFAHREN ZU IHRER HERSTELLUNG**
ANTICORROSION LAYER AND PROCESS FOR PRODUCTION THEREOF
COUCHE DE PROTECTION CONTRE LA CORROSION ET PROCÉDÉ PERMETTANT SA PRODUCTION

(30) Priorität: 08.11.2013 DE 102013018756; 08.11.2013 DE 102013018755
(43) Veröffentlichungstag der Anmeldung: 14.09.2016
(73) Patentinhaber: EPG Engineered nanoProducts Germany AG, 64347 Griesheim (DE)
(72) Erfinder: KROKE, Edwin, 09633 Halsbrücke (DE); PFEIFER, Stefan, 45739 Oer-Erkenschwick (DE)
(74) Vertreter: Kailuweit & Uhlemann Patentanwälte Partnerschaft mbB
(86) Internationale Anmeldenummer: PCT/EP2014/074093
(87) Internationale Veröffentlichungsnummer: WO 2015/067776

(56) Entgegenhaltungen:
- EP-A1- 0 943 634
- CH-A5- 621 818
- DE-A1- 19 813 709

## Beschreibung

Die Erfindung betrifft eine Protektionsschicht, die als Korrosionsschutzschicht auf korrosionsanfälligen Substraten, insbesondere korrodierenden Metallen und/oder deren Legierungen und anderen Werkstoffen, insbesondere als Grundbeschichtung für den Auftrag weiterer poröser Schichtsysteme oder als Deckschicht eingesetzt wird sowie das Verfahren zu ihrer Herstellung und die Verwendung auf eines beschichteten Substrats zum Schutz gegen Korrosion und im Speziellen zur Verwendung gegen mikrobiell induzierte Korrosion (MIC).

Bis weilen wurde die Problematik der MIC-Korrosion durch den Einsatz von Zinn-Lacken entgegengewirkt. Diese Lacke haben allerdings einen negativen Einfluss auf sämtliche Wasserlebewesen. Entsprechend wurde der Einsatz zinnhaltiger Lacke in Europa, Kanada und Japan untersagt. Kupferhaltige Lacke sind noch im Einsatz, werden aber auch aufgrund Ihrer Toxizität verboten. Entsprechend gibt es einen Bedarf an neuen Lacksystemen, die mikrobiell induzierte Korrosionen unterbinden bzw. die Korrosionsgeschwindigkeit maßgeblich verringern.

Die Erfindung betrifft zudem eine Sol-Gel abgeleitete Anti-MIC-Schicht für den Korrosionsschutz und das Verfahren zu ihrer Herstellung. Die Korrosion von Stahl in mariner und terrestrischer Umgebung führt bei Bauelementen jährlich zu sehr hohen Schäden. Korrosion kann je nach Umgebung verschiedene Ursachen haben. Explizit kann Korrosion durch wässrige Medien hervorgerufen werden, die mit dem Werkstoff Stahl in Kontakt treten. Insbesondere, wenn zeitgleich hohe Salzkonzentrationen wie in Meerwasser vorliegen, tritt Korrosion beschleunigt auf. Ein anderer Einflussfaktor, der zur Korrosion führt, kann auf die Anwesenheit von sogenannten "MICs" (microbial induced corrosion) zurückgeführt werden. Bei MICs handelt es sich um Mikroorganismen, die die Korrosion besonders bei Stählen und Eisenlegierungen stark beschleunigen.

Um die Eigenschaften einer Anti-Korrosionsbeschichtung zu charakterisieren und zu klassifizieren, kann als Kriterium der Korrosionswiderstand der Beschichtung herangezogen werden. Dieser wird typischerweise mittels elektrochemischer Impedanzspektroskopie (EIS) bestimmt.

US 2010/0010119 A1 beschreibt die Beschichtung mit einem härtungsfähigen Epoxidharzgemisch. Die Schicht beinhaltet mit Aminogruppen funktionalisierte Schichtsilikate. Diese dienen als Füllmaterialien. Bei diesem Patent kann es potentiell zur Entmischung kommen. Hierdurch entstehen dann unterschiedliche Korrosionsbeständigkeiten. Der Korrosionswiderstand beträgt nach 30 Tagen 10⁹Ωcm².

Nach US 2010/0119837 A1 ist eine Anti-Korrosionsschicht, bestehend aus einem Epoxid funktionalisierten Sol-Gel Netzwerk, bekannt. In diesem Patent hat das Epoxid die Funktion eines Quervernetzers. Die Vernetzung wird mit aromatischen Diaminen durchgeführt. Als Schichtbildner werden Tetraethoxyorthosilikat (TEOS) und Tetramethoxyorthosilikat (TMOS) eingesetzt. Als Epoxid wird 3-Glycidoxypropyltrimethoxysilan (GPTMS) eingesetzt. Als Vernetzungsreagenz wird hauptsächlich Phenyldiamin als ortho-, meta- und para-Gemisch eingesetzt. Das Verhältnis GPTMS zu TMOS beträgt Beispielsweise 3:1. Der Korrosionswiderstand der Beschichtung beträgt ca. 10⁶ Ωcm².
DE 198 13 709 A1 offenbart eine Korrosionsschutzschicht für metallische Substrate, wobei auf das Substrat eine Beschichtungszusammensetzung aufgetragen wird, die auf durch Hydrolyse- und Kondensationsprozesse hergestellten Polysiloxanen basiert.
Geeignet ist die Beschichtungszusammensetzung nur für Metalle und Legierungen, die zur Bildung einer Korrosionsschicht aus einer Spezies X fähig sind, wobei X eine von dem Metall abgeleitete Verbindung ist, z.B. Oxide, Sulfide usw. Die Beschichtungszusammensetzung enthält Kieselsäure-Polykondensate, also Polysiloxane, die mit mindestens einer Spezies Z, z. B: Komplexliganden, versehen sind, die mit dem Metall der zu schützenden Oberfläche chemische Wechselwirkungen eingehen

EP 0 943 634 A1 offenbart eine Silikon-Harz enthaltende Emulsion, die frei von organischen Lösungsmitteln u.a. zur Bildung von Schutzfilmen auf verschiedenen Materialien eingesetzt werden kann. Die Emulsion setzt sich aus zwei Bestandteilen A und B zusammen:
A ist eine Supension vorkondensierter Polysiloxane. Zur Herstellung von A werden Silane, u. a. Alkoxysilane in wässriger Lösung hydrolysiert. Anschliessend werden bei erhöhten Temperaturen oder erniedrigtem Druck die Nebenprodukte der Kondensationsreaktion, wie Alkohole, abgetrennt, wobei die Kondensation weiter fortschreitet.
Es entsteht eine Suspension vorkondensierter, Hydroxy- oder Alkoxygruppen- tragender Siloxane Diese Suspension A wird zu einer radikal-polymerisierbararen Vinylmononmer-Komponente B gegeben, wobei sich A in B löst. Aus dieser Lösung werden weitere Hydrolysenebenprodukte abgetrennt und die Siloxan/Vinylmonomer Lösung einer Emulsionspolymerisation in Anwesenheit von Tensiden unterzogen. Die vorkondensierten Alkoxysilan-Präkusoren liegen dann mit den Polymeren verschlungen oder verwunden vor, sodass das Netzwerk durch die Polymere stabilisiert wird.

CH 621 818 A5 beschreibt eine wässrige Überzugsmasse, die u.a. als Korrosionsschutz auf metallische Substrate aufgetragen werden kann.

Die Überzugsmasse besteht aus einer Dispersion kolloidaler Kieselsäure in einer sauren alkoholisch-wässrigen Lösung mit einem vorkondensiertem Silanol der Formel RSi(OH)₃. Das kondensierte Silanol liegt darin als Feststoff, ebenfalls dispergiert vor.
Hergestellt wird die Überzugsmasse, indem man zunächst kolloidale Kieselsäure in einer Lösung des Alkoxysilans dispergiert. Diese Dispersion wird bei Raumtemperatur mit einer Säure, vorzugsweise eine Carbonsäure wie z. B. Essig- oder Ameisensäure versetzt. Durch die Anwesenheit der Kieselsäure beginnt sofort der Geliervorgang, welcher mit der Hydrolyse des Silans einhergeht. Die Art der Säure bestimmt dabei massgeblich Geschwindigkeit der Gelierung und damit auch die Lagerstabilität der fertigen Lösung.
Nach Einstellung des optimalen pH-Wertes durch die Zugabe von Säure und/oder einer Base wird die Mischung mehrere Tage gealtert, um die Kondensation voranschreiten zu lassen. Die so entstandenen Überzugsmasse aus gelierter Kieselsäure, verbunden mit hydrolysierten Alkoxysilanen, wird anschließend auf das zu schützende Substrat aufgetragen und thermisch gehärtet, wobei eine kratzstabile und ggf. korrosionsbeständige Schutzschicht gebildet wird.

In WO 2009/030959 A1 wird ein biologisch funktionalisiertes Sol-Gel System vorgestellt, welches zur Verminderung/Vermeidung von Biokorrosion eingesetzt werden kann. Das System ist aus den Komponenten TEOS, Methyltriethoxysilan (MTEOS) und aus GPTMS zusammengesetzt. Als Lösungsmittel wird bei der Herstellung Ethanol eingesetzt. Dieser Beschichtungslösung kann nach Konditionierung eine Bakteriensuspension hinzugegeben werden. Um die Vitalität der integrierten Mikroorganismen zu gewährleisten, müssen diese mit Nährstoffen versorgt werden. Dies wird durch eine Porosität der Schicht gewährleistet. Um die mechanische Stabilität der Schichten zu verbessern wurden Aluminiumoxidpartikel eingesetzt. Der Widerstand der Beschichtung wurde mittels EIS bestimmt und betrug 10⁴ Ωcm². Ein Nachteil dieser Erfindung besteht darin, dass die Mikroorganismen vollständig vom Gel umschlossen werden und sich daher innerhalb der Schicht nicht vermehren können. Da Mikroorganismen nur eine zeitlich begrenzte Lebensdauer haben, ist die spezielle Wirkung dieser Beschichtung an die Lebensdauer der Mikroorganismen in der Schicht gekoppelt. Ein weiterer Nachteil ist, dass die gesamte Beschichtung aufgrund der Herstellung porös ist. Dadurch kann Wasser durch die Schicht bis zum Metall diffundieren was wiederum zur (klassischen) Korrosion des Metallsubstrats führt. Außerdem werden Alkohole als Lösungsmittel eingesetzt.

Die Beschichtung in [1] setzt sich aus TEOS und GPTMS zusammen. Thioharnstoff wird als vernetzendes Reagenz eingesetzt. Der Widerstand der Beschichtung beträgt 10⁵Ωcm².

In [2] wird ein Epoxidharz eingesetzt. Dieses wird mit funktionalisierten SiO₂ Partikeln modifiziert. Das Hybridmaterial zeigte einen Korrosionswiderstand von 10⁵Ωcm².

In [3] wird eine rein organische Epoxidharz-Beschichtung eingesetzt. Die elektrochemischen Impedanzmessungen der Schichten zeigten, dass der maximale Korrosionswiderstand der Schicht 10⁷ Ωcm² beträgt.

In [4] werden organische Epoxidharze vorgestellt. Diese basieren auf Bisphenol A. Es werden keine zusätzlichen Additive eingesetzt. Der Korrosionswiederstand beträgt maximal 10⁷ Ωcm². Der Korrosionswiderstand sank nach 7 Tagen Immersion auf 10⁶ Ωcm².

In [5] wird ein Vinylchlorid-Vinylacetat Co-Polymer und ein Epoxidharz basierter Lack vorgestellt. Beide Varianten zeigen einen Korrosionswiderstand von ca. 10⁸Ωcm².

In [6] wird ein Hybridmaterial vorgestellt, dass aus einem Epoxidharz und einem organisch modifizierten Silikat besteht. Um die Wirkung als Korrosionsschutz zu erhöhen wurden Inhibitoren in die Schicht integriert. N-(2-aminoethyl)-3-(trimethoxysilyl)propylamin wird als Silan Präkursor verwendet und nach dessen Hydrolyse mit Araldite GY 257 (Epoxidharz) versetzt. Mit diesem Schichtsystem wurden Korrosionswiderstände kleiner 10⁷Ωcm² erzielt. Durch Immersion in 3,5 % NaCl sank der Korrosionswiderstand nach 12 Tagen auf ca. 10⁶ Ωcm².

In [7] wird ein Hybridmaterial bestehend aus einem Acryl-abgeleiteten Polymer vernetz mit einem Epoxid modifizierten Silan (GPTMS) vorgestellt. Als anorganischer Schichtbildner wird TEOS eingesetzt. In Abhängigkeit der prozentualen Zusammensetzung der organischen und der anorganischen Komponenten werden Werte zwischen 10⁵ bis 10⁸ Ωcm² gemessen.

Die in [8] beschriebene Beschichtung setzt sich aus 2-Mercaptobenzothiazol, Polyanilin, Polypyrrol, N-(2-Aminoethyl)-3-(trimethoxysilyl)propylamin, Diaminodiethylamin sowie einem Epoxidharz (Araldite GY 257) zusammen. Der maximal erreichte Widerstand liegt unterhalb von 10⁶ Ωcm².

In [9] wird Zirkondioxid als Beschichtungsmittel eingesetzt. Die Beschichtungslösung und Art der Beschichtungstechnik werden analog der Sol-Gel Chemie durchgeführt. Die so erzeugten Schichten weisen initial mit einem Korrosionswiderstand größer 10¹⁰ Ωcm² eine sehr gute antikorrosive Eigenschaft auf. Allerdings kommt es durch Immersion in einer 3,5% NaCI-Lösung innerhalb von 7 Tagen zu einem sehr starken Abfall des Widerstandes auf 10⁸ Ωcm².

Die vorgenannten Referenzbeschichtungen weisen teilweise komplizierte Zusammensetzungen auf, sind teilweise porös, enthalten teilweise Korrosionsinhibitoren und sind dadurch teuer.

Zur Beschichtung sind Lösungsmittel erforderlich. Rein organische Schichten weisen eine vergleichsweise geringe thermische Stabilität auf.

Zum einen liegt der vorliegenden Erfindung daher die technische Aufgabe zugrunde, eine einfache auf Basis von leicht zugänglichen und damit kostengünstigen Ausgangsstoffen zugängliche, hochfeste und hochdichte Protektionsschicht mit sehr guten korrosionsschützenden Eigenschaften ohne den Einsatz von Korrosionsinhibitoren und (organischen) Lösungsmitteln zu entwickeln.

Im Stand der Technik wurde von Mikroorganismen berichtet, die in Ihrem Metabolsimus Bestandteile Bilden, die zur Vermeidung von MIC eingesetzt werden können.

WO 2010/095146 A1 beinhaltet ein Sol-Gel basiertes System, welches anti-korrosive Wirkung besitzt. Neben verschiedenen Alkoxysilanen wird zusätzlich ein Inhibitor eingesetzt. Zur Synthese des beschichtungsfähigen Materials werden Alkohole als Lösungsmittel eingesetzt. Nachteilig ist, dass der Einsatz von zusätzlichen Inhibitoren das System komplizierter macht und Kosten verursacht.

In WO 2011/000339 A2 werden Aluminiumoxidpartikel und Epoxide als Beschichtungsmaterial eingesetzt. Um eine durch Bakterien induzierte Korrosion von Stahl zu verhindern, wird ein Biozid auf Pyrithion Basis eingesetzt. Pyrithione sind gesundheitsschädlich und können daher nicht in freien Gewässern oder in Umgebungen eingesetzt werden. Ein Austritt des Biozids in die Umwelt ist in jedem Falle zu vermeiden.

In US 2013/0029134 A1 wird eine Sol-Gel-Beschichtung beschrieben, die im Wesentlichen aus einem organischen und einem anorganischen Präkursor besteht. Das so hergestellte Sol wird mit Polyanilin versetzt. Polyanilin wirkt als antikorrosives Reagenz. Nachteilig ist, dass das Kompositsystem aus mehr als einer Komponente besteht, die Schichtdicke schwer einstellbar ist. Impedanzmessungen zeigten einen maximalen Widerstand von ca. 10⁷ Ωcm². Innerhalb von 10 Tagen sank dieser Wert auf 10⁶ Ωcm².

Der Erfindung liegt ferner die technische Aufgabe zugrunde, eine einfache auf Basis von leicht zugänglichen und damit kostengünstigen Ausgangsstoffen herstellbare Korrosionsschutzschicht ohne Einsatz von Bioziden oder anderweitig schädlichen anti-MIC-Chemikalien zu entwickeln, die einerseits hochdicht ist und gegebenenfalls poröse Bereiche mit integrierten sogenannten anti-MIC Organismen, die Korrosion-verursachende Organismen (MICs) in ihrem Wachstum behindern oder diese abtöten, enthält.

Erfindungsgemäß wird die technische Aufgabe dadurch gelöst, dass eine Korrosionsschutzschicht für den Korrosionsschutz bereitgestellt wird, umfassend:
eine hochdichte Protektionsschicht mit geringer Defektdichte, ohne Risse, Agglomerate oder Poren im Millimeter- oder Mikrometerbereich, auf einem korrosionsanfälligen Substrat, vorzugsweise Metalle und/oder deren Legierungen, enthaltend vorkondensierte schichtbildende Alkoxysilan-Präkursoren, wobei die Moleküle der vorkondensierten schichtbildenden Alkoxysilan-Präkursoren linear und kurzkettig und aus Monomereinheiten, des eingesetzten Alkoxysilan-Präkursors aufgebaut sind, und verbleibende reaktive Hydroxyl-Gruppen oder verbleibende hydrolysierbare Alkoxygruppen aufweisen, wobei die Moleküle der vorkondensierten schichtbildenden Alkoxysilan-Präkursoren miteinander vernetzt sind, wobei die hochdichte Protektionsschicht eine Schichtdicke von mindestens 50 *µ*m aufweist.

Die erfindungsgemäße hochdichte Protektionsschicht aus einem anorganisch-organischen Hybridmaterial besteht vorzugsweise lösungsmittelfrei (d.h. ohne Zusätze von Lösungsmitteln, insbesondere organischen Lösungsmittel) hergestellt aus mindestens einem schichtbildenen Alkoxysilan-Präkursor, insbesondere ausgewählt aus der Gruppe der Trialkoxysilan-Präkursoren.

Als schichtbildender Alkoxysilan-Präkursor werden im Sinne der Erfindung solche Alkoxysilane eingestuft, die mindestens 2 und maximal 4 hydrolysierbare Alkoxygruppen (OR, wobei R ein C₁₋₄-Alkylrest ist) besitzen, wobei diese kovalent an das Siliziumatom gebunden sind. Weiterhin sind die eingesetzten schichtbildenden Alkoxysilane dadurch charakterisiert, dass organische Reste (R₁ und R₂) am Silicium bei Verbindungen, die zwei [R₁R₂Si(OEt)₂] oder drei [R₁Si(OEt)₃] hydrolysierbare Gruppen aufweisen, wobei R₁ und R₂ nicht hydrolysierbare C₁₋₄-Alkylreste und/oder C₆₋₁₀-Arylrest sind und nicht durch chemische Reaktion am Aufbau der Korrosionsschutzschicht beteiligt sind oder mit einer anderen Komponente der Korrosionsschutzschicht eine chemische Reaktion eingehen können.

Bevorzugt sind schichtbildende Alkoxysilan-Präkursoren, ausgewählt aus Methyltriethoxysilan (MTEOS), Tetraethoxyorthosilicat (TEOS), Tetramethoxyorthosilicat, Methyltrimethoxysilan, Dimethyldiethoxysilan, Dimethyldimethoxysilan, Phenyltriethoxysilan, Trimethoxyphenylsilan, Trimethoxy(2-phenylethyl)silane.

Nach einer bevorzugten Ausgestaltung der vorliegenden Erfindung ist der schichtbildende Alkoxysilan-Präkursor ein Trialkoxysilan-Präkursor, aber insbesondere ausgewählt aus MTEOS, TEOS, Tetramethoxyorthosilicat, Methyltrimethoxysilan, Dimethyldiethoxysilan und Phenyltriethoxysilan. Ganz besonders bevorzugt ist der schichtbildende Alkoxysilan-Präkursor MTEOS.

Nach einer bevorzugten Ausgestaltung der vorliegenden Erfindung können die aufgeführten Schichtbildner dabei anteilig gegen MTEOS substituiert werden oder dieses vollständig ersetzen.

Überraschend wurde nun gefunden, dass der schichtbildende Alkoxysilan-Präkursor unter sauren pH-Bedingungen, vorzugsweise unter Kühlung bei einer Temperatur im Bereich von 0 bis 10°C gezielt zu einem vorkondensierten schichtbildenden Alkoxysilan-Präkursor umgesetzt wird. Im Sinne der vorliegenden Erfindung ist unter dem Begriff *"vorkondensierter schichtbildender Alkoxysilan-Präkursor"* ein insbesondere lineares und kurzkettiges, vorzugsweise aus mindestens zwei bis 1000 Monomereinheiten des eingesetzten Alkoxysilan-Präkursors aufgebautes Molekül zu verstehen, welches verbleibende reaktive Hydroxyl-Gruppen oder verbleibende hydrolysierbare Alkoxygruppen aufweist.

Durch die thermische oder chemische Härtung zu einer hochdichten Protektionsschicht reagieren die verbleibenden reaktiven Hydroxyl-Gruppen oder verbleibenden hydrolysierbaren Alkoxygruppen der Moleküle des vorkondensierten schichtbildenden Alkoxysilan-Präkursor miteinander und bilden ein dichtes Netzwerk, wodurch besonders vorteilhaft die Ausbildung einer hochdichten Protektionsschicht begünstigt ist.

Typischerweise sind korrosionsanfällige Substrate für die erfindungsgemäße Korrosionsschutzschicht ausgewählt aus Materialien die durch physikalische, chemische oder biologische Umwelteinflüsse (maritim, kontinental) einer natürlichen Verwitterung bzw. Zersetzung unterliegen. Anschauliche Beispiele für korrosionsanfällige Substrate im Sinne der Erfindung sind bevorzugt ausgewählt, aber nicht beschränkt auf Metalle und/oder Metalllegierung, Keramiken, Gläsern, Holz, Papier und Pappe, natürlichen oder synthetischen Textilien und Fasern, Polymere und Verbundwerkstoffe. Die erfindungsgemäße Korrosionsschutzschicht kann dabei unterschiedliche Funktionen zum Schutz gegenüber den äußeren Umwelteinflüssen übernehmen. Neben des bevorzugten Einsatzes als Korrosionsschutzschichte auf korrosionsanfälligen Substraten kann die Schicht die Kratzfestigkeit eines Substrates erhöhen, Reibung vermindern oder erhöhen, Verschleiß vermindern, Verwitterung und Fouling (von dafür anfälligen Substraten) verhindern, die Beständigkeit gegen unterschiedliche Chemikalien wie organische Lösungsmittel, Säuren, Basen oder andere aggressive Flüssigkeiten, Gase und Feststoffe erhöhen. Entsprechend dem jeweiligen Einsatzzweck kann die erfindungsgemäße Korrosionsschutzschicht in verschiedenen Dicken, Oberflächenbeschichtungen und Schichtaufbauten gefertigt werden.

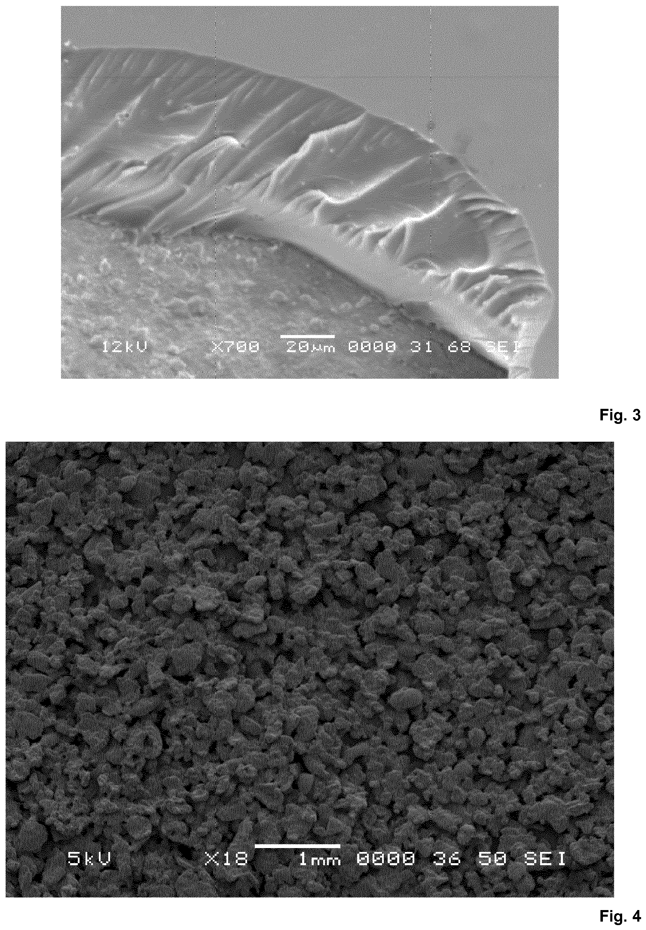

Aufgrund der herausragenden Transparenz und der Glätte (siehe bspw. Figur 3) der erfindungsgemäßen Korrosionsschutzschicht lässt sich mit der Korrosionsschutzschicht ein Glanzeffekt erzeugen, schutzbedürftige Substrate vor Umwelteinflüssen schützen, wobei besonders vorteilhaft die Oberflächen und Morphologien der Substrate sichtbar bleiben.

Vorzugsweise enthält das korrosionsanfällige Substrat ein Metall und/oder eine Metalllegierung. Dabei kann das korrosionsanfällige Substrat Inhaltsstoffe, ausgewählt aus Eisen, Stahl, Eisen-Legierungen, Nicht-Eisenmetalle, Zink-Druckguss, Aluminium-Druckguss, Titan, Titan als Legierung, Magnesium, Magnesium-Druckguss oder Mischungen derselben enthalten, wobei die vorgenannten Metalle vorzugsweise als Legierungsbestandteil in dem Substrat vorliegen. Alternativ kann das Substrat ein metallisiertes Substrat sein, wobei das Substrat (bspw. aus Kunststoff) vollflächig oder teilflächig metallisiert sein kann.

Vorteilhaft kann auf eine haftvermittelnde Zwischenschicht, insbesondere eine Schicht, die zwischen dem Substrat und der hochdichten Protektionsschicht angeordnet ist, verzichtet werden.

Zur Verbesserung der Adhäsion auf metallischen Substraten kann dem Schichtbildner ein Adhäsionsvermittler auf Basis eines Epoxids oder Amins hinzugefügt werden. Vorzugsweise werden organisch modifizierte Trialkoxysilane mit der entsprechenden organischen Funktionalisierung eingesetzt. Nach einer besonders bevorzugten Ausgestaltung der Erfindung wird 3-Glycidyloxypropyltriethoxysilan oder 3-Glycidyloxypropyltrimethoxysilan eingesetzt.

Zusätzlich kann dem erfindungsgemäß besonders bevorzugten Triethoxysilan-Präkursor MTEOS zur Schichtbildung (hierin auch Schichtbildner) 3-Glycidyloxypropyltriethoxysilan (GLYEO) als Additiv hinzugefügt werden. Dieses Epoxid-modifizierte Silan dient zur Verbesserung der Adhäsionsfähigkeit der Beschichtung auf metallischen Substraten.

Die vorgestellte Korrosionsschutzschicht dient zum Schutz von korrosionsanfälligen Substraten, insbesondere Metallen und deren Legierungen. Insbesondere bei der Verwendung von Baustählen kann die vorgestellte Formulierung als Schutz gegenüber Korrosion eingesetzt werden.

Zusätzlich kann die Korrosionsschutzschicht, insbesondere die hochdichte Protektionsschicht Adhäsionspromotoren aufweisen, wobei folgende epoxidfunktionalisierte Silane, vorzugsweise epoxidfunktionalisierte Alkoxysilane als Adhäsionspromotoren eingesetzt werden: 3-Glycidyloxypropyltrimethoxysilan, 3-Glycidoxypropylmethyldiethoxysilan, 3-Glycidoxypropylmethyldimethoxysilan, 2-(3,4-Epoxycyclohexyl)ethyltrimethoxysilan, 2-(3,4-Epoxycyclo-hexyl)ethyltriethoxysilan.

Neben den epoxyfunktionalisierten Silanen können auch solche Verbindungen (d.h. aminofunktionalisierte Alkoxysilane) als Adhäsionspromotor eingesetzt werden, die mit Aminogruppen funktionalisiert sind:
3-Aminopropyltriethoxysilan, 3-Aminopropylmethyldiethoxysilan, Aminopropyltrimethoxysilan, (3-Trimethoxysilylpropyl)diethylentriamin, Aminoethylaminopropyltrimethoxysilan, Aminoethylaminopropyltriethoxysilan, Aminoethylaminopropylmethyldimethoxysilan.

Generell wurde festgestellt, dass eine erfindungsgemäße Beschichtung auch ohne Zugabe von Adhäsionsvermittlern einsatzfähig ist. Allerdings werden die Langzeitstabilität und die Adhäsion der Beschichtung maßgeblich gesteigert. Es erwies sich, dass 0,5 bis 30% des Adhäsionsvermittlers in Bezug auf die Masse des schichtbildenden Alkoxysilan-Präkursoren eingesetzt werden kann. Besonders bevorzugt enthält die erfindungsgemäße Antikorrosionsschutz-Formulierung bis zu 20 Masse% Adhäsionsvermittler. Insbesondere bei einem Verhältnis MTEOS zu GLYEO von 97:5 wurden hervorragende Ergebnisse erzielt. Ein herauszuhebender Vorteil der Beschichtungssubstanz ist, dass bei der Synthese einer beschichtungsfähigen Beschichtungslösung auf den Einsatz von Lösungsmittel verzichtet werden kann. Zur Konditionierung der eingesetzten Präkursoren werden lediglich Wasser, welches zur Hydrolyse der Präkursoren verwendet wird, und ein Katalysator benötigt. Die Hydrolyse der schichtbildenden Alkoxysilan-Präkursoren und die Bildung des Sols (bspw. der Antikorrosionsschutz-Formulierung) werden im sauren Medium durchgeführt. Als Katalysator kann Salzsäure, Salpetersäure, Phosphorsäure und Essigsäure eingesetzt werden. Insbesondere der Einsatz von Salzsäure liefert in einer relativ kurzen Reaktionszeit (ca. 12 Stunden) ein beschichtungsfähiges Sol, welches stabil über einen Zeitraum von mindestens einem Monat, bevorzugt mindestens vier Monate, bei Temperaturen bis 40°C lagerbeständig ist und unverändert eingesetzt werden kann.

Erfindungsgemäß wird Wasser stöchiometrisch in Bezug auf die hydrolysierbaren Alkoxygruppen der eingesetzten schichtbildenden Alkoxysilan-Präkursoren eingesetzt. Dabei entspricht die eingesetzte molare Menge an Wasser maximal der Anzahl an hydrolysierbaren Alkoxygruppen (H₂O:OR = 1:1) oder wird unterstöchiometrisch hinzugegeben. Die Mindestmenge an Wasser beträgt dabei nicht weniger als 50% der maximalen Menge (1:0,5). Wasser dient entsprechend nur der Hydrolyse der eingesetzten Präkursoren und nicht als Lösungsmittel.

Mit der Antikorrosionsschutz-Formulierung als Beschichtungssubstanz können, unabhängig von der Auftrags- und Härtungsmethode, Schichtdicken von >200 *µ*m erzielt werden. Bevorzugt weist die hochdichte Protektionsschicht eine Schichtdicke von mindestens 100 *µ*m, vorzugsweise im Bereich von 100 bis 250 *µ*m auf. Insbesondere Schichtdicken zwischen 100 µm und 150 µm zeigen eine sehr gute Korrosionsbeständigkeit.

Ein Vorteil der Protektionsschicht ist, dass ein von der Zusammensetzung sehr einfaches Sol-Gel-System eine sehr dichte Protektionsschicht erzeugt, ohne weitere Additive zu benötigen. Besonders vorteilhaft benötigt die hochdichte Protektionsschicht für die Anhaftung auf dem Substrat keine zuvor aufzutragende Grundierungsschicht.

Der Fachmann versteht unter einer "hochdichten Protektionsschicht" eine Schicht mit geringer Defektdichte, folglich eine Schicht, die keine Strukturen, wie Risse, Agglomerate oder Poren, mit Abmessungen im Millimeter- oder Mikrometerbereich aufweist und die sich gegenüber Umweltstoffen (bspw. MICs, Wasser, Sauerstoff) inert verhält und/oder diese nicht absorbiert. Die Figuren 2 und 3 zeigen exemplarische eine hochdichte Protektionsschicht mit geringer Defektdichte.

Überraschend wurde gefunden, dass die Transparenz der erfindungsgemäßen Protektionsschicht (bspw. bestimmt mit einem haze-gard *plus* von BYK-Gardner GmbH) gemäß Industriestandard nach ASTM vorteilhaft im Bereich von 40 bis 70% liegt.

Die vorgeschlagene Korrosionsschutzschicht, insbesondere die erfindungsgemäße Protektionsschicht erfüllt ihre antikorrosive Wirkung grundsätzlich ohne das Zusetzen von jeglichen Füllmaterialien und kann somit vorteilhaft als Klarlackbeschichtung angesehen werden, mit der Option Füllmaterialien einzusetzen, die insbesondere zur Anpassung an das Auftragsverfahren dienen, als auch die Optik des Lackes farblich anzupassen.

Es ist allerdings möglich, Füllmaterialien, insbesondere partikuläre Materialien, die die mechanische Stabilität der Schicht verbessern können, in die Protektionsschicht einzubetten. Hierzu können Siliziumdioxid, Titandioxid, Alluminiumoxid, Zinkoxid, aber auch Wollastonit, Talk, Kaolinit, Calciumcarbonat sowie Graphit, Nanotubes, Fullerene oder andere auf Kohlenstoff basierende Füllmaterialien eingesetzt werden. Vorzugsweise können von den genannten partikulären Materialien 0,5-22,5 Gewichtsprozent bezogen auf den Feststoffanteil des Beschichtungsmaterials eingesetzt werden. Es kann auch vorgesehen sein, organische Füllstoffe, insbesondere anti-MIC-Organsimen aus der Gruppe sporenbildender anti-MIC-Organsimen, als partikuläres Material in die hochdichte Protektionsschicht einzubetten.

Weiterhin lassen sich die mechanischen, elektrischen, magnetischen, optischen, chemischen und biologisch-medizinischen Eigenschaften der erfindungsgemäßen Korrosionsschutzschicht in weiten Bereichen durch die Herstellungsparameter variieren, und insbesondere durch den Einsatz von aktiven und passiven Füllstoffen kontrollieren.

Weiterhin ist die Einbettung von für den Fachmann bekannten Farbpigmenten zur Farbgebung möglich. Ohne den Zusatz von Farbpigmenten ist das Schichtsystem nach der Aushärtung farblos und transparent.

Die Untersuchungen an diesem Schichtsystem bestätigten einen sehr guten und anhaltenden Schutz gegenüber (klassischer) Korrosion. Besonders vorteilhaft weist die erfindungsgemäße Protektionsschicht einen initialen Korrosionswiderstand im Bereich, von 10⁹ bis 10¹¹ Ωcm² auf, der nicht signifikant durch Immersion oder Kontakt mit wässrigen Medien herabgesenkt wird.

Da bei der Herstellung auf ein Zweischichtsystem zurückgegriffen wird, kann die Protektionsschicht hinsichtlich der thermischen Härtung optimiert werden, ohne auf die begrenzte Temperaturstabilität von anti-MIC Mikroorganismen achten zu müssen.

Neben dem Schutz vor Korrosion bietet die erfindungsgemäße Protektionsschicht auch die notwendige chemische Voraussetzung, um ein poröses Schichtsystem aufzubringen.

Ein weiterer Aspekt der Erfindung ist daher auch ein poröses Schichtsystem mit integrierten sogenannten anti-MIC Organismen, die Korrosion-verursachende Organismen (MICs) in ihrem Wachstum behindern und/oder diese abtöten.

Nach diesem weiteren Aspekt der vorliegenden Erfindung weist die Korrosionsschutzschicht ein poröses Schichtsystem mit 1 bis 200 *µ*m, bevorzugt mit 5 bis 200 *µ*m, ganz besonders bevorzugt 50 bis 200 *µ*m großen offenen Poren auf, wobei das poröse Schichtsystem auf die hochdichte Protektionsschicht aufgetragen ist, wobei das poröse Schichtsystem aus einem vernetzten Alkoxysilan-Präkursor aufgebaut ist und in den Poren anti-MIC-Organismen angesiedelt sind. Das Grundprinzip ist in Figur 1 dargestellt.

Erfindungsgemäß enthält das poröse Schichtsystem lösungsmittelfrei einen Alkoxysilan-Präkursor, insbesondere ausgewählt aus MTEOS, TEOS, Tetramethoxyorthosilicat, Methyltrimethoxysilan, Dimethyldiethoxysilan und Phenyltriethoxysilan. Ganz besonders bevorzugt ist der schichtbildende Alkoxysilan-Präkursor MTEOS.

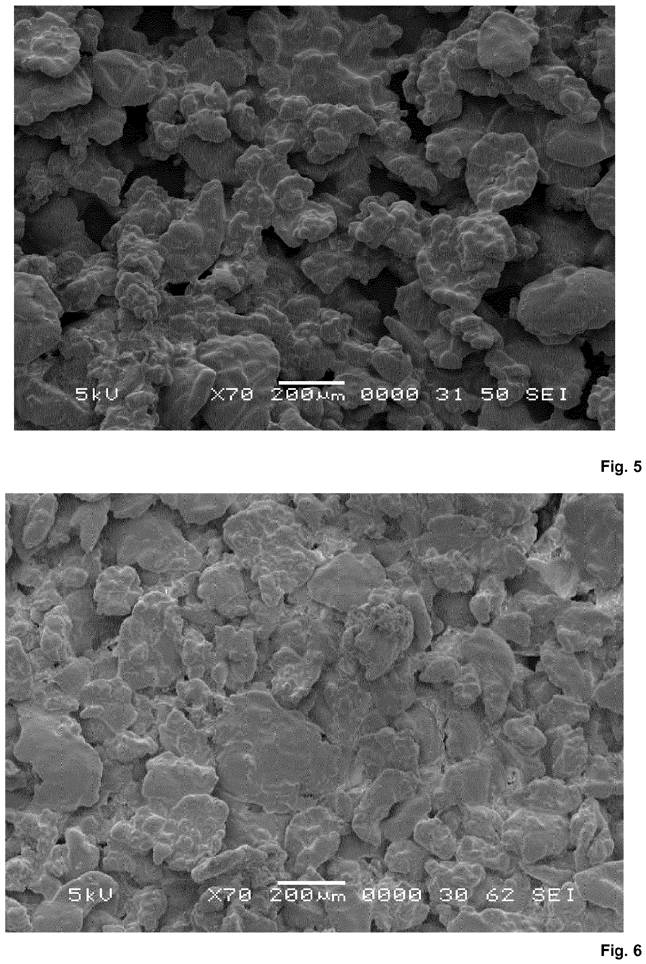

Das poröse Schichtsystem kann zusätzlich mit einer poreneinengenden Deckschicht versehen sein. Die Figur 6 zeigt exemplarisch die erfindungsgemäße poreneinengende Deckschicht auf dem porösen Schichtsystem. Die poreneinengende Deckschicht wird grundsätzlich aus einem wie oben beschriebenen Alkoxysilan-Präkursor, insbesondere ausgewählt aus Methyltriethoxysilan (MTEOS), TEOS, Tetramethoxyorthosilicat, Methyltrimethoxysilan, Dimethyldiethoxysilan und Phenyltriethoxysilan, gebildet.

Die erfindungsgemäß synthetisierte Antikorrosionsschutz-Formulierung kann mit verschiedenen, dem Fachmann bekannten, Techniken auf die Substrate aufgetragen werden. Insbesondere sind Dip-Coating (Tauchbeschichtung) und Pinseln als Methoden für den Auftrag der Antikorrosionsschutz-Formulierung auf dem Substrat geeignet. Weitere Methoden, die zur Beschichtung der Substrate, insbesondere metallischer Substrate, eingesetzt werden können, sind beispielsweise Rollen, Rakeln, Spin-Coating (Schleuderbeschichtung), Float-Coating und Spray-Coating (Sprüh-Beschichtung). Insbesondere erfolgt der Auftrag der Antikorrosionsschutz-Formulierung durch Dip-Coating, Auftropfen, Spachteln oder Pinseln.

Zur Härtung der Antikorrosionsschutz-Formulierung erwiesen sich Umluftöfen (bspw. Wärmeschrank) als auch Infrarot-Strahler als geeignet. Beide Methoden lieferten gute Ergebnisse. Insbesondere bei der Trocknung mittels IR-Strahlern wurden im Vergleich zur Härtung im Umluftofen sehr kurze Härtungszeiten und leicht gesteigerte Eigenschaften der Schichten in Bezug auf die Korrosionsresistenz erzielt.

Vorzugsweise erfolgt die thermische Härtung in einem Ofen oder mittels IR-Strahlern bei Temperaturen > 80°C, aber bevorzugt unterhalb von 160°C.

Die poröse Schicht dient vorzugsweise der Integration und der Immobilisierung von Mikroorganismen aber auch Sporen in das poröse Beschichtungssystem. Dabei ist zu gewährleisten, dass die Mikroorganismen nicht in ihrem Metabolismus eingeschränkt werden. Das erfindungsgemäße Verfahren zur Herstellung des porösen Schichtsystems ermöglicht es vorteilhaft, dass die Mikroorganismen bzw. Sporen bei der Herstellung des porösen Schichtsystems durch die notwendigen Prozesse nicht inaktiviert werden. Hierdurch können die erforderlichen Substanzen (bspw. Nährstoffe), die für den Metabolismus der Mikroorganismen bzw. Sporen essentiell sind, in die Schicht gelangen, wodurch die Organismen biologisch aktiv bleiben und nach dem Herstellungsverfahren vorteilhaft die antimikrobiellen Substanzen bilden, um eine Antikorrosionswirkung gegenüber Mikroorganismen, die Korrosion induzieren (MICs), zu erzeugen. Zudem müssen die Poren in dem Schichtsystem so groß sein, dass sich die Mikroorganismen vermehren können. Hierdurch kann eine länger anhaltende antimikrobielle Wirkung erzeugt werden, als bei Schichtsystemen, in denen die Mikroorganismen so eingebettet sind, dass der zur Kolonisierung erforderliche Raumbedarf fehlt. Durch erfolgreiche Einbettung der Mikroorganismen bzw. Sporen und deren Versorgung mit Nährstoffen können die Organismen Ihren Stoffwechsel ausführen, der für den gewünschten antibakteriellen Effekt notwendig ist. Als anti-MIC Organismen können im Sinne der Erfindung solche Organismen verstanden werden, die über ihren Stoffwechsel ein oder mehrere Metaboliten bilden, die einen antibakteriellen Effekt haben und dadurch das Wachstum von anderen Organismen, insbesondere die für die mikrobiell induzierte Korrosion bzw. den Fouling-Process verantwortlich sind, hemmen, oder eine antibiotische Wirkung entfalten können. Aus der Literatur sind mehrere Organismen bekannt, die für diesen speziellen Zweck eingesetzt werden könnten. Bevorzugte anti-MIC-Organismen für die Integration in ein solches Schichtsystem sind bspw. aus L. D. Chambers et al. (Surface & Coatings Technology 2006, 201, 3642-3652) bekannt und sind insbesondere *Bacillus pumilus, Pseudomonas sp., Bacillus licheniformis* und *Bacillus subtilis* aber auch genetisch modifizierte *E. coli.*

Wobei insbesondere sporenbildende Organismen wie *Bacillus pumilus, Bacillus licheniformis* und *Bacillus subtilis* eingesetzt werden, da die Sporen während der Applikation vorteilhaft weitaus höhere Temperaturen und größere pH-Wert Bereiche zulassen. Vorteilhaft ist bei der Verwendung von sporenbildenden Organismen die Anpassung des pH-Wertes während des Herstellungsverfahrens nicht relevant.

Nach einer alternativ bevorzugten Ausgestaltung der Erfindung wird das poröse Schichtsystem im Anschluss an das Aushärten durch das Aufgeben einer anti-MIC Organismen-enthaltenden Suspension mit Mikroorganismen beladen. Das poröse Schichtsystem wird hierdurch von den anti-MIC Organismen infiltriert.

Die poröse Schicht wird vorzugsweise aus einem Beschichtungsmaterial gebildet, welches sich durch basische Hydrolyse von MTEOS herstellen lässt. Dieser Triethoxysilan-Präkursor wird hierzu ohne Zusatz von Lösungsmittel und bei Raumtemperatur unter Rühren mit Ammoniaklösung versetzt. Bei dieser Reaktion entstehen Partikel die eine äußerst poröse Schicht bilden. Um die Mikroorganismen in dem Schichtsystem besser zu fixieren, ist es zweckmäßig, die Poren in einer Deckschicht soweit zu verengen, dass die Mikroorganismen durch diese nicht entweichen können. Die Diffusion von Nährmedien in die Schicht, als auch die Diffusion von Metaboliten aus der Schicht wird durch die Verengung nicht beeinträchtigt.

Im Sinne der vorliegenden Erfindung versteht der Fachmann unter dem Begriff "MIC" ein Akronym für die mikrobiell induzierte Korrosion (Microbially Influenced Corrosion) von Metallen. Mikrobiell induzierte Korrosion bezeichnet ganz allgemein den Einfluss von Mikroorganismen auf die Kinetik von Korrosionsprozessen bei Metallen, welcher durch das Anhaften von Mikroorganismen an der Metallgrenzfläche herbeigeführt wird (auch "Biofilm" genannt).

Dem Fachmann sind Korrosions-verursachende Mikroorganismen (hierin auch MICs), d.h. die an der MIC beteiligt sind, bestens bekannt und werden in Abhängigkeit ihrer zur Verstoffwechslung geeigneten Substrat- bzw. Elektronakzeptorquelle entsprechend klassifiziert. Bevorzugt sind MICs ausgewählt aus der Gruppe der Sulfat-verstoffwechselnden Bakterienstämme, vorzugsweise *Thiobacillus, Thiothrix, Desulfovibrio desulfuricans, Desulfomaculum ruminis, Desulfonema limicola,* der Schwefel- verstoffwechselnden Bakterienstämme, insbesondere *Desulfuromonas acetoxidans,* der Eisen-oxidierenden/reduzierenden Bakterienstämme, insbesondere *Alteromonas putrefaciens,* und der Magnesium-oxidierenden Bakterienstämme, insbesondere *Shewanella putrefaciens* und *Geobacter sp.*

Ein wesentlicher Vorteil der Erfindung ist die einzigartige Synthese der Beschichtungssubstanzen. Sowohl die Protektionsschicht als auch das poröse Schichtsystem können ohne Zusätze von Lösungsmitteln aus dem gleichen Alkoxysilan-Präkursor-(Gemisch) hergestellt werden. Hierdurch erzielt man eine umweltfreundliche Synthese. Da auf Lösungsmittel verzichtet werden kann ist die Produktion der Beschichtungslösungen zudem kostengünstig. Ein weiterer Vorteil ist die Vermeidung von organischem Lösungsmittel, da die anti-MIC Mikroorganismen i.d.R. nicht in organischen Lösungsmitteln überlebensfähig sind.

Die vorgestellten porösen Schichtsysteme können eine sehr hohe (offene) Porosität und große Porendurchmesser (50-200 *µ*m) aufweisen. Hierdurch ist es möglich, eine hohe Konzentration an Mikroorganismen in die Schicht einzubringen. Aufgrund der Beschaffenheit des Schichtsystems können lebenswichtige Nährstoffe in die Schicht und Metabolite aus der Schicht diffundieren. Hierdurch bleiben die Mikroorganismen aktiv und können sich reproduzieren, was wiederum zu einer deutlich verlängerten Nutzungsdauer im Gegensatz zum Stand der Technik führt. Da mit einer Protektionsschicht gearbeitet wird, ist auch nach Aktivitätsverlust der Mikroorganismen mit einer anhaltenden antikorrosiven Wirkung zu rechnen.

Je nach verwendeten anti-MIC-Organsimen (Mikroorganismus/Spore) kann die Integration durch verschiedene Arbeitsschritte erfolgen. Im Fall von Sporen können die anti-MIC-Organsimen direkt mit der entsprechenden Antikorrosionsschutz-Formulierung gemischt, auf das Substrat aufgetragen und verarbeitet werden. Sporen sind typischerweise bei Temperaturen bis zu 80°C für 30 Minuten überlebensfähig. Nach einer besonders bevorzugten Ausgestaltung der vorliegenden Erfindung weist die hochdichte Protektionsschicht anti-MIC-Organsimen aus der Gruppe sporenbildender anti-MIC-Organsimen auf.

Anti-MIC-Organsimen die nicht als Sporen vorliegen, werden, nachdem die Beschichtung aufgetragen und gehärtet wurde, durch eine Bakteriensuspension auf die Beschichtung aufgetragen. Damit die Mikroorganismen das poröse Schichtsystem nicht verlassen können wird die Oberfläche mit einer weiteren porösen Schicht, die bei niedrigen Temperaturen härtet, geschlossen bzw. die Porengröße so verändert, dass die Organismen nicht durch diese diffundieren können. Sporen können auf gleiche Weise, wenn auch nicht bevorzugt, verarbeitet werden. Die weiteren porösen Schichten mit geringen Porendurchmessern werden dadurch realisiert, dass nach Abschluss der Synthese das Reaktionsgemisch angesäuert wird. Hierdurch bilden sich Agglomerate, die als Schichtsystem aufgetragen Poren mit einem Porendurchmesser unterhalb von 5 µm aufweisen. Bedingt durch das Agglomerieren wird zusätzlich zur Porenverengung auch die effektive Härtungstemperatur vorteilhaft verringert. Die Härtung kann bei Temperaturen zwischen 40 und 80°C durchgeführt werden.

Um die anti-MIC Organismen in dem porösen Schichtsystem besser zu fixieren, sollten die Poren in einer Deckschicht soweit verengt werden, dass die Mikroorganismen durch diese nicht mehr hindurch passen. Nach einer weiterhin bevorzugten Ausgestaltung der vorliegenden Erfindung ist auf das poröse Schichtsystem eine weitere poröse Schicht als poreneinengende bzw. poröse Deckschicht, aufgebaut aus vernetzten Alkoxysilan-Präkursoren, aufgetragen, wobei die weitere poröse Schicht Poren mit einem geringeren Porendurchmesser unterhalb von 5 µm aufweist.

Nach einer alternativ bevorzugten Ausgestaltungsform der vorliegenden Erfindung, besteht die erfindungsgemäße hochdichte Protektionsschicht aus einem anorganisch-organischen Hybridmaterial, lösungsmittelfrei hergestellt aus einem Alkoxysilan-Präkursor, auf die ein poröses Schichtsystem mit 5 bis 200 *µ*m großen offenen Poren aufgetragen ist, und wobei in diesen Poren anti-MIC-Organismen angesiedelt sind. Der Alkoxysilan-Präkursor ist dabei vorzugsweise Methyltriethoxysilan und/oder Tetraethoxyorthosilicat und/oder Tetramethoxyorthosilicat und/oder Methyltrimethoxysilan und/oder Dimethyldiethoxysilan und/oder Phenyltriethoxysilan.

Nach dieser Ausgestaltung enthält die hochdichte Protektionsschicht bis zu 20 Masse% Adhäsionsvermittler, wobei der Adhäsionsvermittler vorzugsweise ein epoxidfunktionalisiertes Alkoxysilan oder aminfunktionalisiertes Alkoxysilan, insbesondere ausgewählt aus 3-Glycidyloxypropyltriethoxysilan und/oder 3-Glycidyloxypropyltrimethoxysilan und/oder 3-Glycidoxypropylmethyldiethoxysilan und/oder 3-Glycidoxypropylmethyldimethoxysilan und/oder 2-(3,4-Epoxycyclohexyl)ethyltrimethoxysilan und/oder 2-(3,4-Epoxycyclohexyl)-ethyltriethoxysilan und/oder 3-Aminopropyltriethoxysilan und/oder, 3-Aminopropylmethyldiethoxysilan und/oder Aminopropyltrimethoxysilan und/oder (3-Trimethoxysilylpropyl)diethylentriamin und/oder Aminoethylaminopropyl-trimethoxysilan und/oder Aminoethylaminopropyltriethoxysilan und/oder Aminoethylaminopropylmethyldimethoxysilan ist.

Die poröse Schicht besteht vorzugsweise aus einem Beschichtungsmaterial, welches durch lösungsmittelfreie basische Hydrolyse von MTEOS erhalten wurde.

Gegenstand der vorliegenden Erfindung ist auch ein Verfahren zur Herstellung einer Korrosionsschutzschicht mit einer hochdichten Protektionsschicht auf einem korrosionsanfälligen Substrat, vorzugsweise Metalle und/oder deren Legierungen, umfassend die Schritte:
a) Bereitstellung einer Antikorrosionsschutz-Formulierung
   wobei mindestens ein schichtbildender Alkoxysilan-Präkursor ohne Zusatz von Lösungsmitteln, durch Zugabe von Wasser in einem molaren Verhältnis zum Alkoxysilan-Präkursor in einem Bereich von 3:1 bis 1:1 unter sauren pH-Bedingungen bei einer Temperatur im Bereich von 0 bis 10°C zu einem vorkondensierten schichtbildenden Alkoxysilan-Präkursor umgesetzt wird,
b) Auftragen der Antikorrosionsschutz-Formulierung auf ein Substrat und
c) Härten der aufgetragenen Antikorrosionsschutz-Formulierung zu einer hochdichten Protektionsschicht.

Nach einer bevorzugten Ausgestaltung der vorliegenden Erfindung wird dem schichtbildenden Alkoxysilan-Präkursor in Schritt a) des erfindungsgemäßen Verfahrens Wasser in einem molaren Verhältnis zum Alkoxysilan-Präkursor in einem Bereich von 3:1 bis 1:1, besonders bevorzugt 3:1 bis 2:1, ganz besonders bevorzugt 2,7:1 bis 2,2:1 zugegeben.

Es kann zweckdienlich sein, dass der Antikorrosionsschutz-Formulierung ein Adhäsionsvermittler zugesetzt ist. Dabei sind die Adhäsionsvermittler vorzugsweise die oben genannten epoxidfunktionalisierte Silane und/oder mit Aminogruppen funktionalisierten Silane.

Vorteilhaft wurde nun gefunden, dass die erfindungsgemäße Bildung des Sols zur Herstellung der hochdichten Protektionsschicht im sauren pH-Bereich zur Bildung vorkondensierter schichtbildender Alkoxysilan-Präkursor führt.

Die Hydrolyse und die Bildung des Sols zur Herstellung der hochdichten Protektionsschicht werden im sauren pH-Bereich durchgeführt. Als azider Katalysator kann Salzsäure, Salpetersäure, Phosphorsäure und Essigsäure eingesetzt werden. Insbesondere der Einsatz von Salzsäure liefert in einer relativ kurzen Reaktionszeit (ca. 12 Stunden) ein beschichtungsfähiges Sol, welches stabil über einen Zeitraum von 6 Monaten unverändert eingesetzt werden kann und bei Tempearturen bis zu 40°C Lagerstabil ist. Bevorzugt werden die sauren pH-Bedingungen in der Antikorrosionsschutz-Formulierung durch Zugabe von Salzsäure, Salpetersäure, Phosphorsäure oder Essigsäure eingestellt.

Erfindungsgemäß werden in dem erfindungsgemäßen Verfahren zur Herstellung einer hochdichten Protektionsschicht als Alkoxysilan-Präkursor MTEOS, Tetraethoxyorthosilicat, Tetramethoxyorthosilicat, Methyltrimethoxysilan, Dimethyldiethoxysilan und Phenyltriethoxysilan eingesetzt. Ganz besonders bevorzugt ist der schichtbildende Alkoxysilan-Präkursor MTEOS.

Es hat sich gezeigt, dass sich die sauren pH-Bedingungen in Schritt a) des erfindungsgemäßen Verfahrens bevorzugt durch die Zugabe eines aziden Katalysators im Verhältnis von Wasser zum aziden Katalysator von 1 zu 0,0001 bis 1 zu 0,01 einstellen lassen.

Die erfindungsgemäß synthetisierte Antikorrosionsschutz-Formulierung kann mit verschiedenen, dem Fachmann bekannten Techniken auf die Substrate aufgetragen werden. Insbesondere sind Dip-Coating (Tauchbeschichtung), Auftropfen, Spachteln, und Pinseln als Methoden für den Auftrag der Antikorrosionsschutz-Formulierung auf dem Substrat geeignet. Weitere Methoden die zur Beschichtung der Substrate, insbesondere metallischer Substrate eingesetzt werden können, sind beispielsweise Rollen, Rakeln, Spin-Coating (Schleuderbeschichtung), Float-Coating und Spray-Coating (Sprüh-Beschichtung). Insbesondere erfolgt der Auftrag der Antikorrosionsschutz-Formulierung durch Dip-Coating, Auftropfen, Spachteln oder Pinseln.

Nach einer alternativ bevorzugten Ausgestaltung des erfindungsgemäßen Verfahrens erfolgt der Auftrag der Antikorrosionsschutz-Formulierung mittels Spray-Coating im Sprühnebel. Alternativ kann die Antikorrosionsschutz-Formulierung auch durch Streichen oder Pinseln aufgetragen werden.

Zur Härtung der Antikorrosionsschutz-Formulierung erwiesen sich Umluftöfen (bspw. Wärmeschrank) als auch Infrarot-Strahler als geeignet. Beide Methoden lieferten sehr gute Ergebnisse. Insbesondere bei der Trocknung mittels IR-Strahlern wurden im Vergleich zur Härtung im Umluftofen sehr kurze Härtungszeiten und leicht gesteigerte Eigenschaften der Schichten in Bezug auf die Korrosionsresistenz erzielt.

Vorzugsweise erfolgt die thermische Härtung in einem Ofen oder mittels IR-Strahlern bei Temperaturen > 80°C, aber bevorzugt unterhalb von 160°C, da bei Temperaturen >160°C Defekte durch Versprödung der aufgetragenen Beschichtung auftreten können. Die maximal anwendbare Härtungstemperatur beträgt 200°C.

Nach einer besonders bevorzugten Ausgestaltung des erfindungsgemäßen Verfahrens wird die Antikorrosionsschutz-Formulierung mittels thermischer Härtung bei einer Temperatur zwischen 60 und 200°C zu einer hochdichten Protektionsschicht gehärtet.

Überraschend wurde nun gefunden, dass durch den Zusatz von Basen zu vorkondensierten schichtbildenden Alkoxysilan-Präkursor, bspw. bei der Antikorrosionsschutz-Formulierung, die verbleibenden reaktiven Hydroxyl-Gruppen oder verbleibenden hydrolysierbaren Alkoxygruppen miteinander reagieren und ein dichtes Netzwerk bilden, wodurch besonders vorteilhaft die Ausbildung einer hochdichten Protektionsschicht begünstigt ist.

Neben der thermischen Härtung kann die Schichtbildung daher auch chemisch initiiert und durchgeführt werden. Das Härtungsverfahren beruht darauf, dass das Sol zu einem dichten Material vernetzt, wobei gleichzeitig Wasser durch die auftretende Schrumpfung aus dem sich bildenden Schichtsystem verdrängt wird. Dies kann besonders effektiv und schnell durch den Zusatz von Basen, bspw. Ammoniumhydroxidlösung, aminofunktionalisierte Alkoxysilane wie beispielsweise Aminopropyltriethoxysilan oder basischen Aminosäuren, wie Arginin, Lysin und Histidin herbeigeführt werden. Weiterhin können basische Makromoleküle wie beispielsweise Polyanilin oder aminofunktionalisierte Polysiloxane als Base zur chemischen Härtung der Beschichtung eingesetzt werden. Zur chemischen Härtung der Schichten bei Raumtemperatur werden bevorzugt Ammoniumhydroxid Lösungen eingesetzt. Die Geschwindigkeit mit der die Antikorrosionsschutz-Formulierung aushärtet, ist sowohl von der eingesetzten Konzentration der Base, als auch von der eingesetzten Menge an Wasser abhängig. In Figur 6 wird am Beispiel einer 28% Ammoniumhydroxid-Lösung die Härtungszeit in Abhängigkeit der eingesetzten Menge an Ammoniumhydrixid-Lösung gezeigt.

Zu den genannten Basen können weiterhin primäre, sekundäre und tertiäre Amine eingesetzt werden. Primäre Amine der allgemeinen Formel NH₂-R₃, wobei R₃ ein gegebenenfalls verzweigter C₁₋₈-Alkylrest ist. Sekundäre Amine der allgemeinen Formel: NH-R₃R₄, wobei R₃ und R₄ unabhängig voneinander gegebenenfalls verzweigter C₁₋₈-Alkylrest sind. Die Reste können die gleiche Alkylkettenlänge aufweisen oder sich in Ihrer Länge unterscheiden. Tertiäre Amine der allgemeinen Formel: N-R₃R₄R₅; wobei R₃, R₄ und R₅ jeweils unabhängig voneinander gegebenenfalls verzweigter C₁₋₈-Alkylrest sind.

Vorzugsweise werden solche Basen und Ihre wässrigen Lösungen eingesetzt, bei denen die basische Komponente leicht und vollständig verdampfbar ist.

Die eingesetzte Konzentration der Base in dem erfindungsgemäßen Verfahren beträgt vorzugsweise 1 bis 50 Vol.-%, besonders bevorzugt 5 bis 35 Vol.-%. Nach einer besonders bevorzugten Ausgestaltung des erfindungsgemäßen Verfahrens liegt die Base in Wasser als ausschließlichem Lösungsmittel vor.

Nach einer bevorzugten Ausgestaltung des erfindungsgemäßen Verfahrens erfolgt eine chemisch initiierte Härtung durch den Zusatz von Basen, insbesondere bei Temperaturen im Bereich von 5 bis 40°C, so dass zur Herstellung der Korrosionsschutzschicht vorteilhaft auf Hochtemperaturschritte über 80°C verzichtet werden kann, bevorzugt erfolgt die Abscheidung bei Temperaturen im Bereich von 5 bis 40°C.

Bei Versuchen zur Herstellung einer erfindungsgemäßen Korrosionsschutzschicht durch das erfindungsgemäße Verfahren wurde gefunden, dass das Verhältnis der Antikorrosionsschutz-Formulierung zur eingesetzten Base ausschlaggebend für die Härtungszeiten und die Dichte der angestrebten Korrosionsschutzschicht ist. Dabei zeigte sich, dass nach dem Auftrag der Antikorrosionsschutz-Formulierung insbesondere ein Verhältnis von Antikorrosionsschutz-Formulierung zur Base im Bereich von 1:0,001 bis 1:1 Vol.-%, ganz besonders bevorzugt im Bereich von 1:0,05 bis 1:0,1 Vol.-% zu besonders dichten Korrosionsschichten bei gleichzeitig vertretbaren Härtungszeiten führt.

Bevorzugt erfährt die, auf dem Substrat aufgetragene, Antikorrosionsschutz-Formulierung durch die thermische und/oder chemische Härtung eine Schrumpfung im Bereich von 10 bis 90%.

Im Fall von epoxidhaltigen Solen ist die Aushärtung auch durch das Versetzen des Sols mit folgenden aminofunktionalisierten Alkoxysilanen möglich:
3-Aminopropyltriethoxysilan, 3-Aminopropylmethyldiethoxysilan, Aminopropyltrime-thoxysilan, (3-Trimethoxysilylpropyl)diethylentriamin, Aminoethylaminopropyltrimethoxysilan, Aminoethylaminopropyltriethoxysilane, Aminoethylaminopropylmethyldimethoxysilane.

Weiterhin können Aminosilane des Typs SiRₓ(NR₆R₇)₄₋ₓ zur chemischen Härtung eingesetzt werden, wobei Rₓ einem gegebenenfalls verzweigten C₁₋₈-Alkylrests entspricht, wobei die Anzahl der Alkylreste zwischen 0 und 3 liegt und wobei R₆ und R₇ unabhängig voneinander gegebenenfalls verzweigter C₁₋₈-Alkylrest sind. Bevorzugt werden solche Amine eingesetzt die bei Normaldruck unterhalb von 100°C verdampfbar sind.

Die Antikorrosionsschutz-Formulierung zur Erzeugung der hochdichten Protektionschicht oder des porösen Schichtsystems kann sowohl als 1-Komponenten-(K)-System, als auch als 2-K-System mittels Spray-Coating aufgetragen werden. Da die Lagerstabilität der Beschichtungslösung, wie der Figur 6 entnommen werden kann, als 1-K-Sytem stark verkürzt ist, wird bevorzugt die Beschichtung mit einem 2-K-System durchgeführt. Bevorzugt wird die Antikorrosionsschutz-Formulierung als Beschichtungslösung mit einem Außenmischsystem aufgetragen. Hierbei werden beide Komponenten der Antikorrosionsschutz-Formulierung im Sprühnebel gemischt und aufgetragen. Das Mischungsverhältnis wird in Anlehnung an Figur 6 und der angestrebten Härtungsdauer aufgetragen. Die angestrebte Schichtdicke der hochdichten Protektionsschicht kann durch das Auftragen der Antikorrosionsschutz-Formulierung in einem Beschichtungsschritt oder in mehreren Zyklen eingestellt werden. Bevorzugt wird die Antikorrosionsschutz-Formulierung in 2-10 Sprühzyklen aufgetragen.

Nach einer bevorzugten Ausgestaltung der vorliegenden Erfindung kann vorgesehen sein, dass auf die, insbesondere durch ein nach Schritt c) des in dem erfindungsgemäßen Verfahren erhaltene, hochdichte Protektionsschicht ein poröses Schichtsystem aufgetragen wird, umfassend folgende Schritte:
**a)** Bereitstellung einer Formulierung für das poröse Schichtsystem wobei mindestens ein schichtbildender Alkoxysilan-Präkursor ohne Zusatz von Lösungsmitteln, durch Zugabe von Wasser in einem molaren Verhältnis von 1:1 bis 1:3 bei Raumtemperatur unter Rühren mit Ammoniaklösung versetzt wird,
**b)** Aufgetragen der Formulierung für das poröse Schichtsystem auf die Protektionsschicht und
**c)** Härten der aufgetragenen Formulierung für das poröse Schichtsystem.

Um die anti-MIC Organismen in dem porösen Schichtsystem besser zu fixieren, kann es dabei zweckdienlich sein, die Poren des porösen Schichtsystems in einer Deckschicht soweit zu verengen, dass die Mikroorganismen durch diese nicht mehr hindurch passen. Erfindungsgemäß kann dies über eine bevorzugte Ausgestaltung des erfindungsgemäßen Verfahrens erzielt werden, wobei auf das poröse Schichtsystem eine weitere poröse Schicht als poröse Deckschicht aufgetragen wird, umfassend folgende Schritte:
**a)** Ansäuern der Formulierung für das poröse Schichtsystem definiert gemäß Schritt a) in Anspruch 16,
**b)** Aufgetragen der Formulierung für die poröse Deckschicht auf die das poröse Schichtsystem und
**c)** Härten der aufgetragenen Formulierung zur Generierung der poröse Deckschicht, wobei die poröse Deckschicht Poren Porendurchmesser unterhalb von 5 µm aufweist.

Nach einer alternativ bevorzugten Ausgestaltungsform des erfindungsgemäßen Verfahrens zur Herstellung der erfindungsgemäßen Korrosionsschutzschicht wird der Alkoxysilan-Präkursor, dem ein Adhäsionsvermittler zugesetzt sein kann, durch Zugabe von Wasser unter sauren Bedingungen unter Kühlung in eine Beschichtungslösung überführt, die Beschichtungslösung auf das Substrat aufgetragen und thermisch gehärtet, wobei auf die so erhaltene Protektionsschicht eine poröse Schicht aufgetragen wird, die hergestellt wird, indem ein MTEOS-Präkursor ohne Zusatz von Lösungsmittel, bei Raumtemperatur unter Rühren mit Ammoniaklösung versetzt, die bei der Reaktion entstehende Beschichtungslösung auf die Protektionsschicht aufgetragen und thermisch gehärtet wird und anschließend Anti-MIC-organismen eingelagert werden.

Dabei werden die sauren Bedingungen bei der Herstellung der Protektionsschicht durch Zugabe von Salzsäure, Salpetersäure, Phosphorsäure oder Essigsäure eingestellt.

Gemäß dieser bevorzugten Ausgestaltungsform des erfindungsgemäßen Verfahrens wird die lösungsmittelfreie Antikorrosionsschutz-Formulierung zur Erzeugung der hochdichten Protektionsschicht durch Dip-Coating (Tauchbeschichtung), Pinseln, Rollen, Rakeln, Spin-Coating (Schleuderbeschichtung), Float-Coating oder Spray-Coating (Sprüh-Beschichtung) auf das Substrat aufgetragen. Für die Herstellung der porösen Schicht wird die entsprechende Antikorrosionsschutz-Formulierung durch Dip-Coating, Auftropfen, Spachteln oder Pinseln auf dem Substrat aufgetragen.

Die Härtung erfolgt hierbei vorzugsweise mittels thermischer Härtung, wobei dies insbesondere in einem Ofen oder mittels IR-Strahlern durchgeführt wird.

Ein weiterer Aspekt der Erfindung umfasst auch eine lösungsmittelfreie Antikorrosionsschutz-Formulierung zur Herstellung einer erfindungsgemäßen Korrosionsschutzschicht unter sauren pH-Bedingungen, wie vorstehend und nachfolgend definiert, enthaltend mindestens einen vorkondensierten schichtbildenden Alkoxysilan-Präkursor, wobei die Moleküle des vorkondensierten schichtbildenden Alkoxysilan-Präkursors linear aus Monomereinheiten des eingesetzten Alkoxysilan-Prekursors, aufgebaut sind, erhalten durch die Umsetzung:
- mindestens eines schichtbildenden Alkoxysilan-Präkursors, ausgewählt aus der Gruppe der vorgenannten Alkoxysilan-Präkursoren, ohne Zusatz von Lösungsmitteln,
- durch Zugabe von Wasser als Reaktant in einem molaren Verhältnis von 1:1 bis 1:3
- unter sauren pH-Bedingungen
- bei einer Temperatur im Bereich von 0 bis 10°C.

Nach einer bevorzugten Ausgestaltung der Erfindung zur Herstellung der erfindungsgemäßen lösungsmittelfreien Antikorrosionsschutz-Formulierung erfolgt die Zugabe von Wasser als Reaktant in einem molaren Verhältnis von 1:3 bis 1:1, besonders bevorzugt 1:3 bis 1:2, ganz besonders 1:2,2 bis 1:2,7.

Es hat sich gezeigt, dass eine besonders lagerstabile Antikorrosionsschutz-Formulierung einen aziden Katalysator im Verhältnis von Wasser zum aziden Katalysator von 1 zu 0,0001 bis 1 zu 0,01 aufweist. Eine derart bereitgestellte Antikorrosionsschutz-Formulierung weist eine Viskosität (bspw. bestimmt mit einem CVO 1200 Rheometer, Bohlin Instruments) im Bereich von 180 bis 700 mPas auf.

Erfindungsgemäß werden zur Herstellung der erfindungsgemäßen lösungsmittelfreien Antikorrosionsschutz-Formulierung als Alkoxysilan-Präkursor MTEOS, Tetraethoxyorthosilicat, Tetramethoxyorthosilicat, Methyltrimethoxysilan, Dimethyldiethoxysilan und Phenyltriethoxysilan eingesetzt. Ganz besonders bevorzugt ist der schichtbildende Alkoxysilan-Präkursor MTEOS.

Dabei kann grundsätzlich auch vorgesehen sein, dass der erfindungsgemäßen Antikorrosionsschutz-Formulierung nach dem Mischen aller Einzelkomponenten und abgeschlossener Bildung der vorkondensierten schichtbildenden Alkoxysilan-Präkursor, die flüchtigen, als Nebenprodukte während der Herstellung gebildeten Komponenten, insbesondere Wasser, aus der Reaktion freigesetzte Alkohole (HOR) und Katalysatorkomponenten entzogen werden. Das Entziehen von flüchtigen Komponenten kann durch die, dem Fachmann bekannten Methoden, wie bspw. durch das Anlegen von Unterdruck, erfolgen.

Ein weiterer Aspekt der vorliegenden Erfindung umfasst eine Antikorrosionsschutz-Formulierung als 2-Komponenten-(K)-Kit zur Herstellung einer erfindungsgemäßen Korrosionsschutzschicht, insbesondere auf einem korrosionsanfälligen Substrat, insbesondere Metalle und/oder deren Legierungen, enthaltend
**a)** eine lösungsmittelfreie Antikorrosionsschutz-Formulierung unter sauren pH-Bedingungen, wie oben definiert, als Komponente A, enthaltend mindestens einen vorkondensierten schichtbildenden Alkoxysilan-Präkursor durch die Umsetzung:
   - mindestens eines schichtbildenden Alkoxysilan-Präkursors, ausgewählt aus der Gruppe der vorgenannten Alkoxysilan-Präkursoren, ohne Zusatz von Lösungsmitteln,
   - durch Zugabe von Wasser als Reaktant in einem molaren Verhältnis von 1:1 bis 1:3
   - unter sauren pH-Bedingungen
   - bei einer Temperatur im Bereich von 0 bis 10°C und
**b)** eine Komponente B für die chemisch initiierte Härtung, enthaltend eine Base.

Nach einer bevorzugten Ausgestaltung der vorliegenden Erfindung weist die Komponente A Wasser in einem molaren Verhältnis von Alkoxysilan-Präkursor zu Wasser in einem Bereich von 1:3 bis 1:1, besonders bevorzugt 1:3 bis 1:2, ganz besonders bevorzugt 1:2,2 bis 1:2,7 auf.

Es hat sich gezeigt, dass eine besonders lagerstabile Komponente A einen aziden Katalysator im Verhältnis von Wasser zum aziden Katalysator von 1 zu 0,0001 bis 1 zu 0,01 aufweist. Eine derart bereitgestellte Komponente A weist eine Viskosität (bspw. bestimmt mit einem CVO 1200 Rheometer, Bohlin Instruments) im Bereich von 180 bis 700 mPas auf.

Alternativ kann auch vorgesehen sein, dass der Komponente A nach dem Mischen aller Einzelkomponenten und abgeschlossener Bildung der vorkondensierten schichtbildenden Alkoxysilan-Präkursor, die flüchtigen, als Nebenprodukte während der Herstellung gebildeten Komponenten, insbesondere Wasser, freigesetzte Alkohole und Katalysatorkomponenten entzogen werden. Das Entziehen von flüchtigen Komponenten kann durch die dem Fachmann bekannten Methoden, wie bspw. durch das Anlegen von Unterdruck, erfolgen.

Die Base der Komponente B dient zur Durchführung der chemisch initiierten Härtung für die Schichtbildung. Als besonders effektive Basen haben sich insbesondere die oben genannten Ammoniumhydroxidlösungen, aminofunktionalisierten Alkoxysilane, basischen Aminosäuren, sowie primäre, sekundäre und tertiäre Amine herausgestellt. Vorzugsweise werden solche Basen und Ihre wässrigen Lösungen in der Komponente B eingesetzt, bei denen die basische Komponente leicht und vollständig verdampfbar ist. Weiterhin sind basische Polymere, die nicht unter Normaldruck und Temperaturen zwischen 30 und 100°C verdampfbar sind, einsetzbar. Beispiel für basische Polymere wären Polyanilin oder aminofunktionalisierte Silikone.

Der Volumenanteil der Base in der erfindungsgemäßen Komponente B beträgt vorzugsweise 1 bis 50 Vol.-%, besonders bevorzugt 5 bis 35 Vol.-%. Nach einer besonders bevorzugten Ausgestaltung des erfindungsgemäßen Kits weist die Komponente B neben der Base ausschließlich Wasser als Lösungsmittel auf.

Bei Versuchen zur Herstellung einer erfindungsgemäßen Korrosionsschutzschicht durch den Auftrag von Komponente A und Komponente B des erfindungsgemäßen Kits wurde gefunden, dass das Verhältnis beider Komponenten ausschlaggebend für die Härtungszeiten und die Dichte der Korrosionsschutzschicht ist. Dabei zeigte sich, dass beim Auftrag der einzelnen Komponenten A und B des erfindungsgemäßen Kits insbesondere ein Verhältnis von Komponente A zu Komponente B im Bereich von 1:0,001 bis 1:1 Vol.-%, ganz besonders bevorzugt im Bereich von 1:0,05 bis 1:0,1 Vol.-% zu besonders dichten Korrosionsschichten bei gleichzeitig vertretbaren Härtungszeiten führt.

Bevorzugt erfolgt die Beschichtung zur Herstellung einer erfindungsgemäßen Korrosionsschutzschicht mit einem erfindungsgemäßen Kit mittels Spray-Coatings im Sprühnebel, so dass zur Herstellung der Korrosionsschutzschicht vorteilhaft auf Hochtemperaturschritte über 80°C verzichtet werden kann, bevorzugt erfolgt die Abscheidung bei Temperaturen im Bereich von 5 bis 40°C. Besonders vorteilhaft werden bei dem Auftrag mittels Spray-Coatings die Komponenten A und B des erfindungsgemäßen Kits im entsprechenden Verhältnis getrennt aber vorzugsweise gleichzeitig voneinander aufgesprüht.

Alternativ kann das Kit auch durch Streichen oder Pinseln aufgetragen werden. Dazu werden die Komponenten A und B des erfindungsgemäßen Kits im entsprechenden Verhältnis vor dem Auftrag auf das Substrat miteinander gemischt.

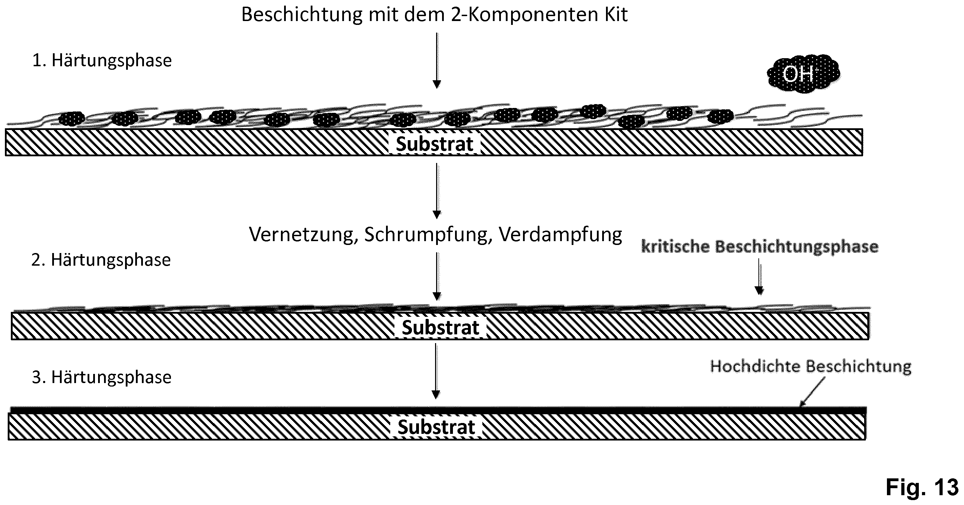

In Figur 13 ist beispielhaft der Härtungsprozess des erfindungsgemäßen 2-Komponenten Kits abgebildet. Die Härtung der Beschichtung kann in drei Phasen gegliedert werden. In der ersten Härtungsphase wird die lösungsmittelfreie Antikorrosionsschutz-Formulierung als Komponente A mit der Härtungskomponente als Komponente B vermischt. Dieses Mischen kann beispielsweise im Sprühnebel einer 2-Komponenten Sprühpistole geschehen. Alternativ zum Sprühauftrag können auch die Flüssigkeiten der beiden Komponenten unmittelbar vor der Applikation vermischt werden und anschließend die vermischten Komponenten des 2-Komponenten Kits auf die zu beschichtende Oberfläche des Substrats aufgetragen werden. In beiden Fällen kommt es zur Hydrolyse der verbliebenen Alkoxygruppen der vorkondensierten schichtbildenden Alkoxysilan-Präkursor in der Beschichtungslösung und zur Kondensation von Silanol-Gruppen. Hierdurch erstarrt langsam die aufgetragene Beschichtungslösung. Mit Anstieg der Viskosität der aufgetragenen Lösung geht die Beschichtung in die zweite Härtungsphase über. Bedingt durch die Vernetzung des Materials, insbesondere der vorkondensierten schichtbildenden Alkoxysilan-Präkursoren, kommt es zur Schrumpfung der aufgetragenen Schicht. Durch voranschreitende Schrumpfung wird sowohl das bei der Kondensation und Hydrolyse gebildete Alkohol (bspw. Ethanol bei Verwendung von MTEOS) und Wasser aus der Schicht verdrängt, welches an der Oberfläche verdampft. In der abschließenden dritten Phase kommt es zur weiteren Verdichtung der aufgetragenen Schicht und die maximale Schichtdicke wird erhalten. Die letzte Phase ist abgeschlossen, nachdem die Oberfläche nicht mehr klebrig ist und Wasser nicht mehr von der Beschichtung aufgenommen werden kann.

Die zweite Härtungsphase kann als kritisch angesehen werden, da bei zu hohen Anteilen der Komponente B die Ausbildung der Schicht gestört werden kann. Dies kann zu unerwünschten porösen und/oder rissigen Schichten führen.

Gegenstand der Erfindung ist auch ein beschichtetes Substrat, insbesondere ein beschichtetes Werkstück, das mindestens eine erfindungsgemäße Korrosionsschutzschicht auf einem korrosionsanfälligen Substrat, insbesondere Metalle und/oder deren Legierung umfasst. Bevorzugt sind beschichtete Werkstücke Bleche, Stahlträger, Rohre, korrosionsanfällige Konstruktionen, Karosserien, Schiffsrümpfe, Tanks, Baustahl. Dabei können derartig beschichtete Werkstoffe in unterschiedlichsten Industriezweigen, z.B. für Fassaden, im Metallbau, für Verkehrswesen und im allgemeinen Maschinenbau eingesetzt werden. Vorzugsweise wird das beschichtete Werkstück in der Metallbau-, Anlagenbau-, Schiff- und Automobilindustrie im Getriebe-, Motoren- und Karosseriebereich eingesetzt. Passend zum jeweiligen Einsatzzweck kann die erfindungsgemäße Korrosionsschutzschicht in verschiedenen Dicken, Oberflächenbeschichtungen und Schichtaufbauten gefertigt werden.

Durch die vorliegende Erfindung ist ferner auch die Verwendung der erfindungsgemäßen Korrosionsschutzschicht zum Schutz gegenüber Korrosion auf korrosionsanfälligen Substraten, vorzugsweise Metalle und/oder deren Legierungen mitumfasst.

Gegenstand der Erfindung ist auch die Verwendung der erfindungsgemäßen Korrosionsschutzschicht zum Schutz von korrosionsanfälligen Substraten, vorzugsweise, aber nicht beschränkt auf, Metalle und/oder deren Legierungen, Keramiken, Gläsern, oder Materialien wie Holz, Papier oder Pappe, natürliche oder synthetische Textilien und Fasern, Verbundwerkstoffen und/oder Polymere gegenüber Korrosion oder zur Verbesserung von bestimmten Eigenschaften des jeweils eingesetzten Substrats.

Neben der bevorzugten Verwendung der erfindungsgemäßen Korrosionsschutzschichten zum Schutz gegenüber äußeren Umwelteinflüssen, die insbesondere Korrosion auslösen, kann die erfindungsgemäße Korrosionsschutzschicht die Kratzfestigkeit eines Substrates erhöhen, Reibung vermindern oder erhöhen, Verschleiß vermindern, Verwitterung und Fouling (von dafür anfälligen Substraten) verhindern, die Beständigkeit gegen unterschiedliche Chemikalien wie organische Lösungsmittel, Säuren, Basen oder andere aggressive Flüssigkeiten, Gase und Feststoffe erhöhen.

Da die erfindungsgemäße Korrosionsschutzschicht elektrisch isolierend wirkt, findet sie alternativ bevorzugt Verwendung als Isolationsschicht auf einem Substrat.

Aufgrund der herausragenden Transparenz und der Glätte der erfindungsgemäßen Korrosionsschutzschicht findet die Korrosionsschutzschicht insbesondere Verwendung als Klarlackbeschichtung, wobei besonders vorteilhaft die Oberflächen und Morphologien der Substrate sichtbar bleiben.

Nachfolgend soll die Erfindung anhand einiger Ausführungsbeispiele und zugehöriger Figuren eingehender erläutert werden. Die folgenden Beispiele dienen der weiteren Erläuterung der Erfindung, ohne die Erfindung auf diese zu beschränken.

Dabei zeigt:
- **Fig. 1:**: schematisch das Grundprinzip einer hochdichten Protektionsschicht eines porösen Schichtsystems mit 1 bis 200 µm großen offenen Poren, wobei in diesen Poren anti-MIC-Organismen angesiedelt sind.
- **Fig. 2:**: eine erfindungsgemäße hochdichte Protektionsschicht in der Draufsicht.
- **Fig. 3:**: vergrößert die Bruchkante einer hochdichten Protektionsschicht.
- **Fig. 4:**: die REM-Darstellung des porösen Schichtsystems.
- **Fig. 5:**: die REM-Darstellung der verdichteten poreneinengenden Deckschicht.
- **Fig. 6:**: die REM-Darstellung des porösen Schichtsystems.

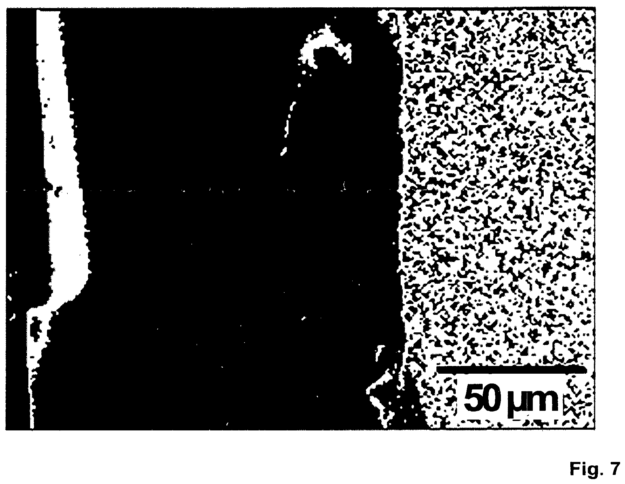

- **Fig. 7:**: den Querschnitt durch einen, mit der erfindungsgemäßen hochdichten Protektionsschicht (links) beschichteten, Stahlträger (rechts).

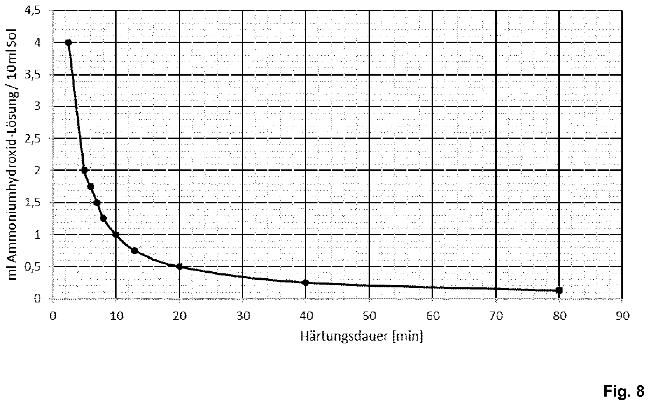

- **Fig. 8:**: am Beispiel einer 28% Ammoniumhydroxid-Lösung den Verlauf der Härtungszeit in Abhängigkeit der eingesetzten Menge an Ammoniumhydrixid-Lösung.
- **Fig. 9:**: das FT-IR Spektrum (im Bereich 2000-600 cm⁻¹) der Beschichtungslösung nach erfolgter Synthese.
- **Fig. 10:**: das ²⁹Si NMR Spektrum der Beschichtungslösung.
- **Fig. 11:**: den Einfluss des Verhältnisses MTEOS/Wasser auf die T-Gruppen Verteilung bei konstanter Katalysatormenge (Verhältnis MTEOS/Katalysator 1:0.003).
- **Fig. 12:**: das CP/MAS ²⁹NMR-Spektrum einer gehärteten Protektionsschicht.
- **Fig. 13:**: den schematischen Härtungsprozess des 2-Komponenten Kits.

### Beispiel 1 - Synthese der Beschichtungsformulierung

57 g Methyltriethoxysilan (MTEOS) und 3 g GLYMO werden in einem 100 ml Rundkolben vorgelegt. Die Reaktionslösung wird anschließend mit einem Eisbad auf 5°C gekühlt. Nachdem die gewünschte Temperatur erreicht wurde, werden langsam 9 ml H₂O dem System hinzugetropft. Es wird so viel einer 1 molaren Salzsäure hinzugegeben, dass die Menge an HCl in dem Reaktionsmedium 0,329 mol beträgt. Ungefähr eine Minute nach Zugabe der Salzsäure bildet sich ein homogenes Gemisch. Die Reaktionslösung wird für weitere 30 Minuten bei 5°C gerührt. Im Anschluss wird die Kühlung entfernt. Das Reaktionsgemisch wird im Anschluss mindestens 12 Stunden gerührt bevor sie als Beschichtungslösung eingesetzt werden kann. Die Entstandene Beschichtungslösung hat eine Viskosität von 4,3 mP.

Die Menge an Wasser und die beschriebene Säurekonzentration ist bevorzugt einzusetzen. Wird beispielsweise die Säurekonzentration verdoppelt, erhält man eine Beschichtungslösung, die eine Viskosität von 8,5 mP besitzt. Zwar kann auch diese Lösung zur Beschichtung eingesetzt werden, jedoch kommt es bereits nach einem Tag zur vollständigen Gelierung. Niedrigere Mengen an Säure bis 0,15 mol sind noch einsatzfähig.

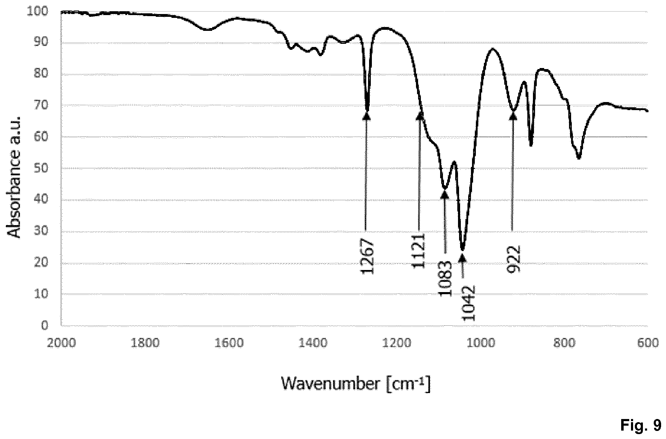

In Figur 9 ist ein FT-IR Spektrum der erfindungsgemäßen Antikorrosionsschutz-Formulierung als Beschichtungslösung nach Abschluss der Synthese abgebildet. Aus dem Spektrum wird ersichtlich, dass das eingesetzte MTEOS, während die Beschichtungslösung gebildet wird, nicht vollständig hydrolysiert. Charakteristische Schwingungsbanden, die auf verbliebene Ethoxygruppen hinweisen, liegen bei 922, 1083 und 1042 cm⁻¹. Die Bande bei 1121 cm⁻¹ zeigt, dass sich Kondensate (Si-O-Si), die zur Netzwerkbildung beitragen, gebildet wurden. Die Schwingungsbande bei 1267 cm⁻¹ kann der am Silicium kovalent gebundenen Methylgruppe (Me-Si) zugeordnet werden.

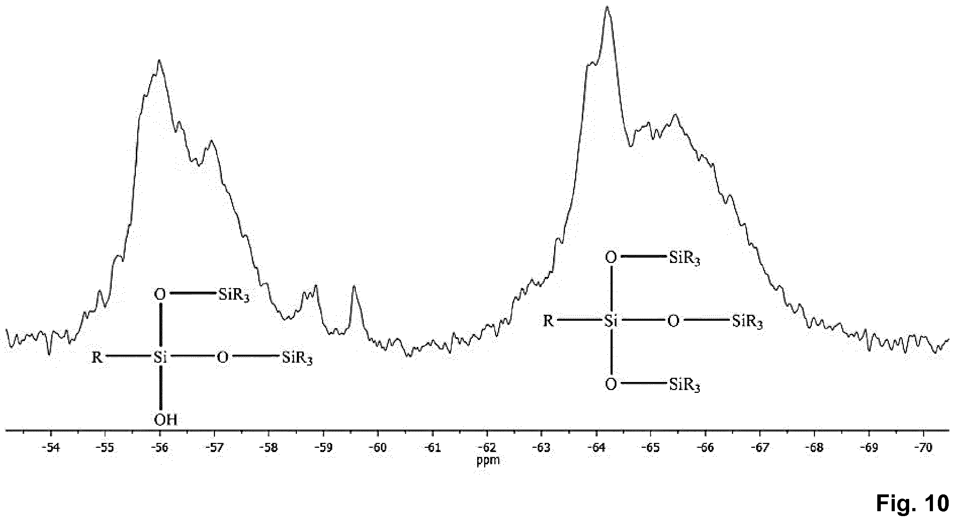

In Figur 10 ist das ²⁹Si-NMR Spektrum der erfindungsgemäßen Antikorrosionsschutz-Formulierung als Beschichtungslösung nach Abschluss der Synthese abgebildet. In Anlehnung an das abgebildete Spektrum besteht die Beschichtungslösung aus 2 wesentlichen Kondensationsprodukten.

Die entstandenen T³-Gruppen bilden drei Siloxanbindungen (Si-O-Si). Diese Gruppen führen zu Verzweigungen und tragen zur Clusterbildung bei. Hingegen bilden die T²-Gruppen zwei Siloxanbindungen und bilden die entsprechend linearen Segmente des vorkondensierten schichtbildenden MTEOS als Alkoxysilan-Präkursor. Insbesondere die T²-Gruppen werden während des Härtungsprozesses zur Vernetzung zwischen den gebildeten Clustern benötigt. Während der Kondensation kann die verbleibende Reaktionsstelle am kondensierten MTEOS weitere Vernetzungsreaktionen eingehen, was zur Verdichtung des abgeschiedenen Materials bei der Härtung (thermisch/chemisch) führt.

Durch Anpassung der Edukt-Verhältnisse von MTEOS zu Wasser und Katalysator können die gebildeten Kondensationsprodukte gezielt beeinflusst werden. Die Zusammensetzung der Kondensationsprodukte hat einen wesentlichen Einfluss auf die Härtungsparameter. Weiterhin beeinflusst die Zusammensetzung der T-Gruppen wesentlich die Schichteigenschaften wie Flexibilität, Härte und die Beständigkeit gegenüber von Lösungsmitteln. Beispielsweise sind Beschichtungen die aus Beschichtungslösungen mit hohen T³-Gruppen-anteil entstanden sind spröder als solche, mit anteilig weniger T³-Gruppen. Die Lösungsmittelbeständigkeit steigt mit dem T³-Gruppenanteil in der gehärteten Schicht. Die Flexibilität wird hingegen durch die Ausbildung weniger T³-Gruppen unterstützt. In Bezug auf die Barriere-Eigenschaft gegenüber Korrosion stellte sich heraus, dass ein hoher T³-Gruppenanteil von Vorteil ist. Schichten, die ausschließlich aus T³-Gruppen bestehen, zeigten hingegen eine verminderte Schutzwirkung.

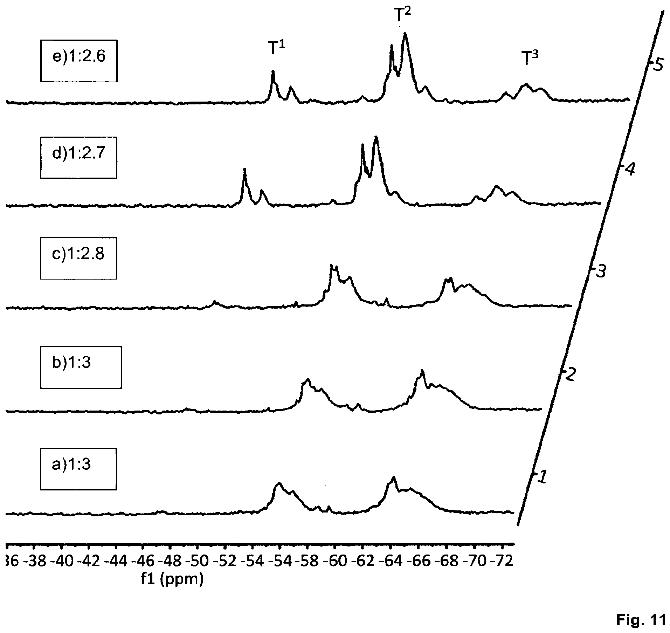

In Figur 11 ist der Einfluss der eingesetzten Menge an Wasser auf die gebildeten T-Gruppen dargestellt.

Das eingesetzte Verhältnis von MTEOS zu Wasser wurde von a) nach e) von 1:3 auf ein Verhältnis von 1: 2,6 verringert. Zur Kontrolle der Reproduzierbarkeit der Synthese wurden die Beschichtungslösungen a) und b) unter gleichen Bedingungen und Verhältnissen von MTEOS/WASSER und Katalysator hergestellt. Wie den beiden Spektren entnommen werden kann, sind keine Unterschiede zu erkennen. Sowohl die gebildeten Gruppen als auch die jeweiligen Intensitäten sind vergleichbar.

Ab einem Verhältnis von 1:2,7 sind deutliche Veränderungen im Spektrum zu beobachten. Neben einer deutlich verringerten Intensität der T³-Gruppen und einem leichten Anstieg der T²-Gruppen ist die Anwesenheit von einfach kondensierten Produkten (T¹) erkennbar.

Sowohl die gebildeten T¹-Gruppen als auch die geringere Bildung an T³-Gruppen haben einen positiven Effekt auf die Härtungstemperatur im Falle der thermischen Härtung. Im Fall von Beschichtungslösungen, die eine Zusammensetzung wie Spektrum a und b aufweisen liegt die optimale Härtungstemperatur bei 120°C bis 140°C. Bei Beschichtungslösungen, die mit einem MTEOS/Wasser Verhältnis zwischen 1:2,6 und 1:2,7 hergestellt wurden, liegt die optimale Härtungstemperatur bei 80-120°C.

### Beispiel 2 - Synthese der Beschichtungslösung

57 g Methyltriethoxysilan und 3 g GLYMO werden in einem 100 ml Rundkolben vorgelegt. Die Reaktionslösung wird anschließend mit einem Eisbad auf 5°C gekühlt. Nachdem die gewünschte Temperatur erreicht wurde, werden langsam 9 ml H₂O dem System hinzugetropft. Es wird so viel einer 1 molaren Salzsäure hinzugegeben, dass die Menge an HCl in dem Reaktionsmedium 0,329 mol beträgt. Ungefähr eine Minute nach Zugabe der Salzsäure bildet sich ein homogenes Gemisch. Die Reaktionslösung wird für weitere 30 Minuten bei 5°C gerührt. Im Anschluss wird die Kühlung entfernt. Das Reaktionsgemisch wird im Anschluss mindestens 12 Stunden gerührt, bevor sie als Beschichtungslösung eingesetzt werden kann.

Im Anschluss kann, dass bei der Hydrolyse gebildete Ethanol sowie das Wasser, welches bei der Kondensation von Silanol-Gruppen als Nebenprodukt entsteht, aus der synthetisierten Beschichtungslösung entfernt werden. Bevorzugt werden die gebildeten Nebenprodukte unter Unterdruck und bei Raumtemperatur entfernt. Der Druck sollte während der Destillation unterhalb von 1 mbar liegen. Optimal beträgt der Druck während der Destillation 10⁻² mbar bis 10⁻³ mbar. Zur Beschleunigung kann die Temperatur während der Destillation erhöht werden. Bevorzugt wird bei einer Temperatur zwischen 30 und 55°C gearbeitet.

### Beispiel 3 - Beschichtung mit Dip-Coater

Die in Beispiel 1 hergestellten Beschichtungslösungen können als Beschichtungssubstanz ohne weitere Veränderungen eingesetzt werden. Als Dip-Coater wurde ein Linear Motor der Firma JennyScience eingesetzt. Vor der Beschichtung wurden die zu beschichtenden Stahlplatten mit Aceton gründlich entfettet. Die Substrate wurden anschließend ohne weitere Vorbehandlungen eingesetzt.

Bei den jeweiligen Beschichtungsversuchen wurden die Geschwindigkeiten des Eintauchvorgangs konstant bei 10 cm/min gehalten. Die Verweilzeit des Substrates in der Beschichtungslösung belief sich auf 30 Sekunden. Nach dieser Verweilzeit wurden die Substrate mit Geschwindigkeiten zwischen 2 und 11 cm/min aus der Beschichtungslösung gezogen.

Durch Wiederholung des Beschichtungsvorganges konnten Schichtdicken von bis zu 200 µm erzielt werden. Nach jedem Beschichtungsschritt war hierzu eine kurze Härtung bei 60 - 120°C für 1 - 20 Minuten notwendig. Vortrocknungen von 5 Minuten bei 80°C erwiesen sich als besonders geeignet. Nach Auftrag der letzten Schicht erfolgte die vollständige Härtung der Schicht bei Temperaturen zwischen 80°C und 200°C. Insbesondere bei 120°C konnten sehr gute Ergebnisse erzielt werden. Die Schichten wurden der Temperatur für 10 min - 2 Stunden ausgesetzt. Insbesondere bei Verweilzeiten im Härtungsofen für 30 min erwiesen sie sich als besonders geeignet.

### Beispiel 4 - Beschichtung durch Pinseln (Streichen)

Als weitere Beschichtungsmethode kann die Beschichtungslösung durch Pinseln auf die zu beschichtenden Oberfläche aufgetragen werden. Um beispielsweise eine Schichtdicke von ca. 160 µm zu erhalten wird pro cm² 0,041 g der Beschichtungslösung aufgetragen und vorsichtig auf der zu beschichtenden Oberfläche verteilt. Bei dieser Methode kann direkt die gewünschte Menge an Beschichtungslösung aufgetragen werden. Bei dieser Beschichtungsmethode ließen sich auch bei sehr hohen Lackaufträgen defektfreie Schichten erzeugen. Hierdurch ist Pinseln als Beschichtungsmethode dem Dip-Coating vorzuziehen.

Das Auftragen der Beschichtung durch Pinseln kann mit Beschichtungslösungen erfolgen, die in Anlehnung an die Vorschriften Beispiel 1 und Beispiel 2 hergestellt wurden. Besonders bevorzugt werden Beschichtungslösungen, die nach Beispiel 2 hergestellt wurden.

### Beispiel 5 - Beschichtung mit dem 2-Komponenten-Kit durch Pinseln (Streichen)

Zur Beschichtung mit dem 2-Komponenten-Kit wird eine Beschichtungslösung eingesetzt, die in Anlehnung an die Beispiele 1 & 2 hergestellt wurden. Insbesondere die nach Beispiel 2 hergestellten Beschichtungslösungen eignen sich zur Herstellung des 2-Komponenten-Kits. Die Beschichtung kann entweder aufgepinselt oder alternativ durch ein 2-Komponenten Sprühverfahren aufgetragen werden.

Wird das 2-Komponenten-Kit durch Pinseln aufgetragen, wird eine entsprechende Menge der Beschichtungslösung mit der Härtungskomponente vermischt. Gemischt werden beide Komponenten, bevorzugt in einem geschlossenen Gefäß durch Schütteln oder Magnetrührer. Alternativ, aber weniger bevorzugt, können beide Komponenten in einem offenen Gefäß vermischt werden. In offenen Gefäßen können Bestandteile der Komponente B verdampfen. Hierdurch kann die Härtungsdauer und Erscheinung der Beschichtung und die Funktionalität negativ beeinflusst werden. Als Mischungsverhältnis der Komponenten A und B wird ein Verhältnis von 1: 0,004 bevorzugt. Die Topfzeit des 2-Komponenten-Kits beträgt nach Durchmischung mindestens 30 Minuten. Es ist während der Beschichtung zu gewährleisten, dass die frisch aufgetragene Schicht nicht mit Feuchtigkeit, Regen oder Kondensationswasser in Kontakt kommt. Die aufgetragene Schicht ist nach 16-24 Stunden einsatzfähig. Zur Erhöhung der Schichtdicke kann die Beschichtung mehrfach aufgetragen bzw. überstrichen werden. Beschichtete Oberflächen sollten frühestens 16 Stunden nach dem die erste Schicht aufgetragen wurde, überstrichen werden. Ein oberes Limit existiert nicht.

### Beispiel 6 - Beschichtung mit dem 2-Komponenten-Kit durch Sprühen

Zur Beschichtung mit dem 2-Komponenten-Kit wird eine Beschichtungslösung eingesetzt die in Anlehnung an die Beispiele 1 & 2 hergestellt wurden. Insbesondere die nach Beispiel 2 hergestellten Beschichtungslösungen eignen sich zur Herstellung des 2-Komponenten-Kits und zum Auftrag mittels Sprühtechnik.

Besonders bevorzugt wird ein 2-Komponenten Sprühsystem, indem beide Komponenten des Kits separat in Druckbehältern gespeichert werden und erst während des Sprühvorganges im Sprühnebel gemischt werden, eingesetzt. Die Drücke der beiden Behälter sind dabei so zu wählen, dass das Verhältnis der Komponenten im Sprühnebel zwischen 1:0.2 und 1:0.5 liegt.

Es ist während der Beschichtung zu gewährleisten, dass die frisch aufgetragene Schicht nicht mit Feuchtigkeit, Regen oder Kondensationswasser in Kontakt kommt. Die aufgetragene Schicht ist nach 16-24 Stunden einsatzfähig. Zur Erhöhung der Schichtdicke können Oberflächen mehrfach beschichtet werden. Beschichtete Oberflächen sollten frühestens 16 Stunden nach dem die erste Schicht aufgetragen wurde, überstrichen werden. Ein oberes Limit existiert nicht.

### Beispiel 7 - Härtung im Wärmeschrank

Die Härtung im Wärmeschrank eignet sich, um die durch Dip-Coating oder Pinseln aufgetragenen Schichten zu Härten. Zur Härtung der Schicht erwiesen sich 120°C als besonders geeignet, um Schichten vollständig zu härten. In der Regel wurden die Schichten für 30 Minuten bei der entsprechenden Temperatur gehärtet. Durch längere Exposition der Schichten im Trockenschrank, traten keine Veränderungen der Schichteigenschaften auf. Defekte traten erst auf, wenn die Temperatur zu hoch gewählt wurde (T°C >160°C). Bei der Durchführung von Mehrfachbeschichtungen erwies es sich als sinnvoll, die Schichten zwischen zu härten. Es erwies sich dabei als nachteilhaft, 120°C als Temperatur zu wählen. Wurde bei dieser Temperatur die Zwischenhärtung durchgeführt, konnten keine weiteren Schichten aufgetragen werden. Die geeignete Temperatur zur Zwischenhärtung lag bei 80°C. Die erforderliche Exposition im Trockenofen lag zwischen 5 und 15 Minuten. 5 Minuten wurden jedoch in der Regel nicht überschritten und auf keinen Fall unterschritten. Nach erfolgter Härtung konnten die Schichten direkt aus dem Ofen bei Raumtemperatur abgekühlt werden. Während des Abkühlens traten keine Defekte auf.

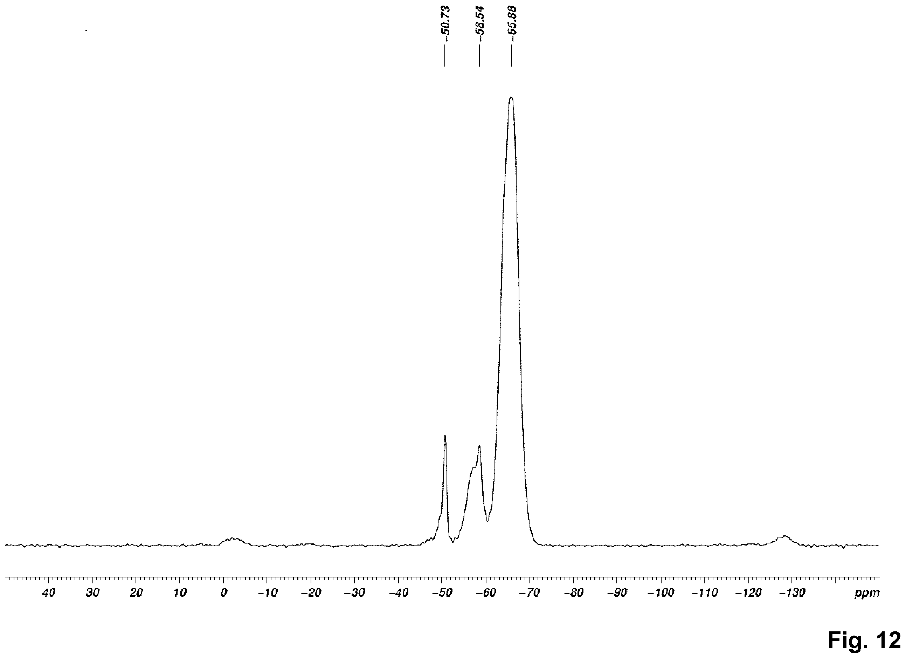

Bei der Synthese der Beschichtungslösung, die nach erfolgreicher Aushärtung zu dem in Figur 12 abgebildeten CP/MAS ²⁹NMR-Spektrum einer gehärteten Protektionsschicht führte, wurde ein Verhältnis von MTEOS/Wasser/Katalysator von 1:2.7:0.003 gewählt (Synthese wie Beispiel 1). Die erzeugte Beschichtungslösung wurde ohne weitere Veränderungen als Film aufgetragen und für 25 min bei 120°C gehärtet. Wie der Figur 12 zu entnehmen ist, sind sowohl T¹-(-50,73 ppm), T²-(-58,54 ppm) und T³-Gruppen (-65,88 ppm) an der Schichtbildung beteiligt. Insbesondere die T³-Gruppen, welche zu einer dichten Schichtstruktur führen, haben entsprechend des Spektrums einen hohen Anteil an der Schichtbildung. Insbesondere das Verhältnis der an der Schicht beteiligten T-Gruppen, als auch die bei der Synthese gebildeten Cluster führen zu den besonderen Schichteigenschaften der Protektionsschicht.

### Beispiel 8 - Härtung mittels Infrarot-Strahler

Als weitere Methode zur Härtung können Infrarotstrahler eingesetzt werden. Die Durchführbarkeit der Härtung wurde mit einem Gerät der Firma Haereus Noble Light getestet (3,5 kW Gesamtleistung). Es zeigte sich, dass die Schichten, welche auf diesem Weg gehärtet wurden, vergleichbare Ergebnisse in Bezug auf die elektrochemischen Impedanzmessungen (10¹⁰ Ω cm²) aufwiesen. Auch nach 40 Tagen Immersion in 3,5% NaCI-Lösung lag der Widerstand oberhalb von 10⁹ Ωcm².

Zur Härtung der Schichten wurde die nasse Beschichtung in einem Abstand von 10 cm unter die Strahler-Vorrichtung gelegt. Die Intensität des Strahlers kann durch ein zwischengeschaltetes Potentiometer geregelt werden. Insbesondere eine 50% (1,75 kW) - 100% (3,5 kW) Einstellung erwies sich als besonders geeignet. Insbesondere bei 100% Leistung konnte innerhalb einer Bestrahlungsdauer von 3 Minuten die gewünschten Schichteigenschaften erzielt werden.

Bei 100% Leistung liegt die optimale Härtungsdauer zwischen 60 und 240 Sekunden. Ein Optimum wurde bei 180 Sekunden festgestellt. Bei 75% Leistung lag die optimale Härtungsdauer zwischen 90 und 480 Sekunden. Die besten Schichteigenschaften wurden bei 360 Sekunden festgestellt. Bei 50% Leistung wurde die höchste Bestrahlungsdauer benötigt, um vollständig gehärtete Schichten zu erhalten. Die optimale Dauer lag zwischen 300 und 720 Sekunden.

### Beispiel 9 - Charakterisierung der Schichten

Die erfindungsgemäß hergestellten MTEOS/GLYEO-Schichten wurden mittels Rasterelektrodenmikroskopie (REM) charakterisiert. In Figur 2 ist die Schicht in der Aufsicht abgebildet. Wie der Darstellung entnommen werden kann, sind keine Defekte der Oberfläche zu erkennen. Weiterhin ist die Schicht als äußert glatt zu bezeichnen. In Figur 3 ist die Bruchkante der Schicht vergrößert dargestellt. In dieser Darstellung ist insbesondere die gute Haftung zwischen dem Substrat und der Beschichtung zu erkennen. Des Weiteren sind in der Schicht keinerlei Risse zu erkennen. Da die Beschichtung auch innerhalb der Schicht keine Risse aufweist, kann davon ausgegangen werden, dass keine Diffusion von Wasser oder Substanzen, die zur Korrosion führen, stattfinden.

Die Schichten wurden in Hinsicht auf ihre Tauglichkeit als Anti-Korrosionsschicht mittels elektrochemischer Impedanzspektroskopie (EIS) untersucht. Bei dieser Messmethode wird der Widerstand der Schicht ermittelt. Der Widerstand spiegelt dabei die Güte der Beschichtung in Hinsicht auf die schützenden Eigenschaften gegenüber Korrosion wieder. Die Messungen an dem Schichtsystem zeigten, das direkt nach Immersion der Probe in 3,5% NaCl der Widerstand der Schicht 10¹⁰ Ωcm² beträgt. Die Messung wurde nach 4 Stunden und nach dreitägiger Immersion in der Testlösung wiederholt. Durch die Immersion kam es zu einer geringfügigen Verminderung des zuvor ermittelten Wertes. Dieses Verhalten kann auf die Aufnahme von Wasser zurückgeführt werden. Das bedeutet, das Wasser in die Schicht diffundiert bzw. von dieser aufgenommen wird. Auch nach 40 tägiger Immersion in der Testlösung wurden sehr gute Eigenschaften ermittelt (Konstant 10¹⁰ Ωcm²).

### Beispiel 10 - Synthese mit Beschichtungslösung zur Herstellung poröser Schichtsystem mit großen Poren

In einem Rundkolben werden 30 g (0,1680 mol) MTEOS vorgelegt. Unter starkem rühren werden zügig 18 ml einer 28%igen Ammoniak-Lösung hinzugegeben. Das Reaktionsgemisch wird für mindestens 8 Stunden bei Raumtemperatur gerührt. Nach 8 Stunden kann die entstandene Lösung zu Beschichtungszwecken eingesetzt werden. Die zu integrierenden Mikroorganismen (hier Bacillus Pumillus) können nach Neutralisation der entstandenen Beschichtungslösung hinzugegeben werden. Alternativ können die Organismen auch zu einem späteren Zeitpunkt in die Schicht integriert werden (siehe Beispiel 10). Bei der Verwendung von Sporen ist die Anpassung des pH-Wertes nicht relevant.

### Beispiel 11 - Synthese mit Beschichtungslösung zur Herstellung poröser Schichtsystem mit kleinen Poren

Um ein dichteres Schichtsystem zu erhalten wird das in Beispiel 9 hergestellte Material nach Synthese mit konzentrierter Salzsäurelösung versetzt. Im Anschluss wird unter Vakuum langsam Ethanol, welches bei der Synthese entsteht, abgezogen. Anschließend werden 10 ml Wasser hinzugegeben. Die so entstandene Beschichtungslösung kann zur Herstellung von Schichten geringer Porengröße eingesetzt werden.

Die zu integrierenden Mikroorganismen können nach Neutralisation der entstandenen Beschichtungslösung hinzugegeben werden. Alternativ können die Organismen auch zu einem späteren Zeitpunkt in die Schicht integriert werden (siehe Beispiel 10).

### Beispiel 12 - Beschichtungsbeispiel poröses Schichtsystem

Nachdem die Beschichtungslösung für die Protektionsschicht gemäß Beispiel 1 hergestellt, gemäß Beispiel 2 aufgetragen und gemäß Beispiel 4 gehärtet wurde, kann die Beschichtungslösung für die poröse Schicht, die in Anlehnung an Beispiel 9 hergestellt wurde, aufgetragen werden. Dies geschieht vorzugsweise durch Pinseln. Alternativ kann die poröse Schicht auch durch Auftropfen der Beschichtungslösung auf die Protektionsschicht oder durch Dip-Coating aufgetragen werden. Die nasse Schicht wird für 5 - 20 Minuten bei 60 - 120°C gehärtet. Es zeigte sich, dass insbesondere die Härtung der Schicht bei 60 - 80°C für 5 - 10 Minuten sehr erfolgreich verläuft. Die durch dieses Material gebildeten Poren bewegen sich zwischen 50 *µ*m und 200 *µ*m. Figur 4 zeigt die REM-Darstellung des porösen Schichtsystems. Die Porengröße des Beschichtungsmaterials kann durch die Zugabe von Wasser beeinflusst werden. Durch Verdünnung der Beschichtungssubstanz mit Wasser werden dichtere Schichtsysteme erhalten. Figur 5 zeigt die REM-Darstellung des verdichteten porösen Schichtsystems. Aufgrund der Porengröße können Mikroorganismen in die Beschichtung integriert werden. Ein weiterer positiver Effekt ist, dass sich die Organismen innerhalb des Schichtsystems replizieren können. Um die so entstandene Beschichtung mit Mikroorganismen zu beladen, wird eine Mikroorganismen-Suspension auf die Schicht gegeben. Die Poröse Schicht wird hierdurch infiltriert. Die Beschichtung kann anschließend als effektive Korrosionsschutzbeschichtung eingesetzt werden.

### Beispiel 13 - Beschichtungsbeispiel poröses Schichtsystem

Nachdem die Beschichtungslösung für die Protektionsschicht gemäß Beispiel 1 hergestellt, gemäß Beispiel 3 aufgetragen und gemäß Beispiel 5 gehärtet wurde, kann die Beschichtungslösung, die in Anlehnung an Beispiel 9 hergestellt wurde, aufgetragen werden. Dies geschieht vorzugsweise durch Pinseln. Alternativ kann die poröse Schicht auch durch Auftropfen der Beschichtungslösung auf die Protektionsschicht oder durch Dip-Coating aufgetragen werden. Die aufgetragene Schicht wird für 5 - 60 Minuten bei 60 - 120°C gehärtet. Es zeigte sich, dass insbesondere die Härtung der Schicht bei 60 - 80°C für 5 - 30 Minuten sehr erfolgreich verläuft. Um die so entstandene Beschichtung mit Mikroorganismen zu beladen, wird eine Mikroorganismen-Suspension auf die Schicht gegeben. Die Poröse Schicht wird hierdurch infiltriert. Um die Mikroorganismen in dem Schichtsystem besser zu fixieren, sollten die Poren in einer Deckschicht soweit verengt werden, dass die Mikroorganismen durch diese nicht mehr hindurch passen. Es zeigte sich, dass hierzu dasselbe Beschichtungsmaterial geeignet ist. Hierzu wird das Beschichtungsmaterial, wie in Synthesebeispiel 10 hergestellt, auf die bestehende poröse Schicht eine Deckschicht aufgetragen. Getrocknet wird diese Schicht bei 30°C - 40 °C für 5 - 20 Minuten. Die Trocknung bei höheren Temperaturen wird nicht empfohlen, da ansonsten die integrierten Mikroorganismen zu Schaden kommen könnten. Wie der Figur 6 entnommen werden kann, ist die Porenweite um ein Vielfaches gesunken. Die verbleibende Porengröße ermöglicht, dass Stoffe in die Schicht diffundieren können bzw. Stoffe aus dieser in die Umgebung herausdiffundieren. Mikroorganismen bleiben allerdings aufgrund Ihrer Größe in der Schicht fixiert.

Die Überlebensfähigkeit von Mikroorganismen wurde anhand von fluoreszierenden *E. coli* Bakterien (mit GFP als grün fluoreszierendem Protein) nachgewiesen. Hierzu wurde die beschriebene Beschichtung mit diesen Mikroorganismen beladen. Nach anschließender Aktivierung der Proteinexpression konnte unter UV-Licht Fluoreszenz nachgewiesen werden.

### Beispiel 14 - Beschichtungsbeispiel poröses Schichtsystem

Zu den genannten Beschichtungsbeispielen kann das poröse Schichtsystem auch durch Spachteln aufgetragen werden. Hierzu werden die bei der Synthese des porösen Materials entstandenen Partikel abfiltriert. Diese Partikel können anschließend im Massenverhältnis 1:1 bis 1:10 mit der verbliebenen Lösung versetzt werden. Hierbei entsteht eine breiige Substanz, die zum Spachteln eingesetzt werden kann. Alternativ kann auch Wasser oder Ethanol zum anteigen der Partikel eingesetzt werden. Auch hier kann in einem Verhältnis von 1:1 bis 1:10 gearbeitet werden. Nachdem das Material durch Spachteln auf die zu beschichtende Oberfläche aufgetragen wurde, erfolgt die Härtung bei 60 - 80°C für 5 - 30 Minuten.

### Literaturverzeichnis

[1] S. Peng, Z. Zeng, W. Zhao, H. Li, Q. Xue, X. Wu, Synergistic effect of thiourea in epoxy functionalized silica sol-gel coating for copper protection, Surf. Coat. Technol., 2012, 213, 175-182.
[2] T. C. Huang, Y. A. Su, T. C. Yeh, H.-Y. Huang, C.P. Wu, K.Y. Huang, Y.C. Chou, J.M. Yeh, Y. Wei, Advanced anticorrosive coatings prepared from electroactive epoxy-SiO2 hybrid nanocomposite materials, Electrochim. Acta, 2011, 56, 6142-6149.
[3] R. N. Patil, B.V. Sharma, P.A. Maha, Corrosion Performance of Hybrid Epoxy Resin Coatings with Electrochemical impedance Spectroscopy, Chem. Sin., 2012, 3, 458-467.
[4] M.A. Alam, E.S. M. Sherif, S. M. AI-Zahrani, Fabrication of Variousb Epoxy Coatings for Offshore Applications and Evaluating Their Mechanical Properties and Corrosion Behavior, Int. J. Electrochem. Sci., 2013, 8, 3121-3131.
[5] U. Kharchenko, I. Beleneva, Evaluation of coatings corrosion resistance with biocomponents as antifouling additives, Corros. Sci., 2013, 72, 47-53.
**[6]** I.A. Kartsonakis, A.C. Balaskas, E.P. Koumoulos, C.A. Charitidis, G. Kordas, ORMOSILepoxy coatings with ceramic containers for corrosion protection of magnesium alloys ZK10, Prog. Org. Coat., 2013, 76, 459- 470.
[7] F. Khelifa, M.E. Druart, Y. Habibi, F. Benard, P. Leclere,Marjorie Olivier, Philippe Dubois, Sol-gel incorporation of silica nanofillers for tuning the anti-corrosion protection of acrylate-based coatings, Prog. Org. Coat., 2013, 76, 900- 911.
[8] A. Kartsonakis, E.P. Koumoulos, A.C. Balaskas, G.S. Pappas, C.A. Charitidis, G.C. Kordas, Hybrid organic-inorganic multilayer coatings including nanocontainers for corrosion protection of metal alloys, Corros. Sci., 2012, 57, 56-66.
[9] F. Andreatta, L. Paussa, P. Aldighieri, A. Lanzuttia, D. Raps, L. Fedrizzi, Corrosion behaviour of sol-gel treated and painted AA2024 aluminium alloy, Prog. Org. Coat., 2010, 69, 133-142.

## Patentansprüche

1. Korrosionsschutzschicht für den Korrosionsschutz umfassend eine hochdichte Protektionsschicht mit geringer Defektdichte, ohne Risse, Agglomerate oder Poren im Millimeter- oder Mikrometerbereich, auf einem korrosionsanfälligen Substrat, enthaltend vorkondensierte schichtbildende Alkoxysilan-Präkursoren, wobei die Moleküle der vorkondensierten schichtbildenden Alkoxysilan-Präkursoren linear und kurzkettig und aus Monomereinheiten des eingesetzten Alkoxysilan-Präkursors, aufgebaut sind und verbleibende reaktive Hydroxyl-Gruppen oder verbleibende hydrolysierbare Alkoxygruppen aufweisen, wobei die Moleküle der vorkondensierten schichtbildenden Alkoxysilan-Präkursoren miteinander vernetzt sind, wobei die hochdichte Protektionsschicht eine Schichtdicke von mindestens 50 µm aufweist.

2. Korrosionsschutzschicht nach Anspruch 1, **dadurch gekennzeichnet, dass** der Alkoxysilan-Präkursor Methyltriethoxysilan und/oder Tetraethoxyorthosilicat und/oder Tetramethoxyorthosilicat und/oder Methyltrimethoxysilan und/oder Dimethyldiethoxysilan und/oder Phenyltriethoxysilan ist.

3. Korrosionsschutzschicht nach Anspruch 1 oder 2, **gekennzeichnet dadurch, dass** die hochdichte Protektionsschicht bis zu 20 Masse% Adhäsionsvermittler enthält.

4. Korrosionsschutzschicht nach einem der Ansprüche 1 bis 3, **gekennzeichnet dadurch, dass** die hochdichte Protektionsschicht bis zu 22,5 Masse% partikularem Material enthält.

5. Korrosionsschutzschicht nach Anspruch 3 oder 4, **gekennzeichnet dadurch, dass** der Adhäsionsvermittler 3-Glycidyloxypropyltriethoxysilan und/oder 3-Glycidyloxypropyltrimethoxysilan und/oder 3-Glycidoxypropylmethyldiethoxysilan und/oder 3-Glycidoxypropylmethyldimethoxysilan und/oder 2-(3,4-Epoxycyclohexyl)ethyltrimethoxysilan und/oder 2-(3,4-Epoxycyclohexyl)-ethyltriethoxysilan und/oder 3-Aminopropyltriethoxysilan und/oder, 3-Aminopropylmethyldiethoxysilan und/oder Aminopropyltrimethoxysilan und/oder (3-Trimethoxysilylpropyl)diethylentriamin und/oder Aminoethylaminopropyltrimethoxysilan und/oder Aminoethylaminopropyltriethoxysilane und/oder Aminoethylaminopropylmethyldmethoxysilane ist.

6. Korrosionsschutzschicht nach einem der vorgenannten Ansprüche, **dadurch gekennzeichnet, dass** die Korrosionsschutzschicht ein poröses Schichtsystem mit 1 bis 200 µm großen offenen Poren aufweist, wobei das poröse Schichtsystem auf die hochdichte Protektionsschicht aufgetragen ist, wobei das poröse Schichtsystem aus vernetzten Alkoxysilan-Präkursoren aufgebaut ist und in den Poren anti-MIC-Organismen angesiedelt sind.

7. Korrosionsschutzschicht nach Anspruch 6, **gekennzeichnet dadurch, dass** auf das poröse Schichtsystem eine poröse Deckschicht, aufgebaut aus vernetzten Alkoxysilan-Präkursoren, aufgetragen ist, wobei die poröse Deckschicht Poren mit einem Porendurchmesser unterhalb von 5 µm aufweist.

8. Verfahren zur Herstellung einer Korrosionsschutzschicht mit einer hochdichten Protektionsschicht auf einem korrosionsanfälligen Substrat, umfassend die Schritte:
a) Bereitstellung einer Antikorrosionsschutz-Formulierung, wobei mindestens ein schichtbildender Alkoxysilan-Präkursor ohne Zusatz von Lösungsmitteln, durch Zugabe von Wasser in einem molaren Verhältnis von 3:1 bis 1:1 unter sauren pH-Bedingungen bei einer Temperatur im Bereich von 0 bis 10°C zu einem vorkondensierten schichtbildenden Alkoxysilan-Präkursor umgesetzt wird,
b) Auftragen der Antikorrosionsschutz-Formulierung auf ein Substrat und
c) Härten der aufgetragenen Antikorrosionsschutz-Formulierung zu einer hochdichten Protektionsschicht.

9. Verfahren gemäß Anspruch 8, **dadurch gekennzeichnet, dass** die sauren pH-Bedingungen für die Erzeugung einer hochdichten Protektionsschicht durch Zugabe von Salzsäure, Salpetersäure, Phosporsäure oder Essigsäure als azider Katalysator eingestellt werden.

10. Verfahren nach Anspruch 8 oder 9, **dadurch gekennzeichnet, dass** als Triethoxysilan-Präkursor Methyltriethoxysilan und/oder Tetraethoxyorthosilicat und/oder Tetramethoxyorthosilicat und/oder Methyltrimethoxysilan und/oder Dimethyldiethoxysilan und/oder Phenyltriethoxysilan eingesetzt wird.

11. Verfahren nach einem der Ansprüche 8 bis 10, **dadurch gekennzeichnet, dass** die Antikorrosionsschutz-Formulierung durch Dip-Coating, Auftropfen, Spachteln oder Pinseln aufgetragen wird.

12. Verfahren nach einem der Ansprüche 8 bis 11, **dadurch gekennzeichnet, dass** die Antikorrosionsschutz-Formulierung vor dem Auftrag direkt mit Sporen von anti-MIC-Organsimen gemischt wird.

13. Verfahren nach einem der Ansprüche 8 bis 12, **dadurch gekennzeichnet, dass** die Antikorrosionsschutz-Formulierung mittels thermischer Härtung bei einer Temperatur zwischen 60 und 200°C zu einer hochdichten Protektionsschicht gehärtet wird.

14. Verfahren nach einem der Ansprüche 8 bis 12, **dadurch gekennzeichnet, dass** die Antikorrosionsschutz-Formulierung mittels chemisch initiierter Härtung durch den Zusatz von Basen zu einer hochdichten Protektionsschicht gehärtet wird.

15. Verfahren nach einem der Ansprüche 8 bis 14, **dadurch gekennzeichnet, dass** die Antikorrosionsschutz-Formulierung mittels Spray-Coating im Sprühnebel aufgetragen wird.

16. Verfahren nach einem der Ansprüche 8 bis 15, **dadurch gekennzeichnet, dass** auf die Protektionsschicht ein poröses Schichtsystem aufgetragen wird, umfassend folgende Schritte:
a) Bereitstellung einer Formulierung für das poröse Schichtsystem, wobei mindestens ein schichtbildender Alkoxysilan-Präkursor ohne Zusatz von Lösungsmitteln, durch Zugabe von Wasser in einem molaren Verhältnis von 1:1 bis 1:3 bei Raumtemperatur unter Rühren mit Ammoniaklösung versetzt wird,
b) Auftragen der Formulierung für das poröse Schichtsystem auf die Protektionsschicht und
c) Härten der aufgetragenen Formulierung für das poröse Schichtsystem.

17. Verfahren nach Anspruch 16, **dadurch gekennzeichnet, dass** die Formulierung für das poröse Schichtsystem vor dem Auftrag direkt mit anti-MIC-Organsimen gemischt wird.

18. Verfahren nach Anspruch 16, **dadurch gekennzeichnet, dass** nach dem Härten der Formulierung für das poröse Schichtsystem eine Bakteriensuspension auf das poröse Schichtsystem aufgetragen wird.

19. Verfahren nach einem der Ansprüche 16 bis 18, **dadurch gekennzeichnet, dass** auf das poröse Schichtsystem eine poröse Deckschicht aufgetragen wird, umfassend folgende Schritte:
a) Ansäuern der Formulierung für das poröse Schichtsystem definiert gemäß Schritt a) in Anspruch 16,
b) Aufgetragen der Formulierung für die poröse Deckschicht auf die das poröse Schichtsystem und
c) Härten der aufgetragenen Formulierung zur porösen Deckschicht.

20. Lösungsmittelfreie Antikorrosionsschutz-Formulierung zur Herstellung einer Korrosionsschutzschicht nach Anspruch 1, enthaltend mindestens einen vorkondensierten schichtbildenden Alkoxysilan-Präkursor, wobei die Moleküle des vorkondensierten schichtbildenden Alkoxysilan-Präkursors linear aus Monomereinheiten des eingesetzten Alkoxysilan-Prekursors, aufgebaut sind erhalten durch die Umsetzung:
- mindestens eines schichtbildenden Alkoxysilan-Präkursors ohne Zusatz von Lösungsmitteln,
- durch Zugabe von Wasser in einem molaren Verhältnis von 1:1 bis 1:3
- unter sauren pH-Bedingungen
- bei einer Temperatur im Bereich von 0 bis 10°C.

21. Lösungsmittelfreie Antikorrosionsschutz-Formulierung nach Anspruch 20, **dadurch gekennzeichnet, dass** der Alkoxysilan-Präkursor Methyltriethoxysilan und/oder Tetraethoxyorthosilicat und/oder Tetramethoxyorthosilicat und/oder Methyltrimethoxysilan und/oder Dimethyldiethoxysilan und/oder Phenyltriethoxysilan ist.

22. Lösungsmittelfreie Antikorrosionsschutz-Formulierung nach Anspruch 20 oder 21, **dadurch gekennzeichnet, dass** der Antikorrosionsschutz-Formulierung nach dem Mischen aller Einzelkomponenten und abgeschlossener Bildung der vorkondensierten schichtbildenden Alkoxysilan-Präkursoren, die flüchtigen Komponenten der Formulierung entzogen wurden.

23. Antikorrosionsschutz-Formulierung, enthaltend
a) eine lösungsmittelfreie Antikorrosionsschutz-Formulierung unter sauren pH-Bedingungen definiert über einen der Ansprüche 20 bis 22 als Komponente A und
b) eine Komponente B für die chemisch initiierte Härtung, enthaltend eine Base.

24. Antikorrosionsschutz-Formulierung nach Anspruch 23, **dadurch gekennzeichnet, dass** der Volumenanteil der Base in der Komponente B vorzugsweise 1 bis 50 Vol.-% beträgt.

25. Antikorrosionsschutz-Formulierung nach Anspruch 23 oder 24, **dadurch gekennzeichnet, dass** die Base der Komponente B eine Ammoniumhydroxidlösung, aminofunktionalisiertes Alkoxysilan, basische Aminosäure oder ein primäres, sekundäres oder tertiäres Amin ist.

## Claims

1. An anti-corrosion coating to protect against corrosion, comprising a high-density protective coating with low defect density, without cracks, agglomerates or pores in a milimeter or micrometer range, on a substrate which is prone to corrosion containing pre-condensed coat-forming alkoxysilane precursors, wherein the molecules of the pre-condensed coat-forming alkoxysilane precursors are linear and short-chained and built up from monomer units of the applied alkoxysilane precursors, and possess remaining reactive hydroxy groups odr remaining hydrolysable alkoxy groups, wherein the molecules of the pre-condensed coat-forming alkoxysilane precursors are cross-linked with each other, wherein the high-density protective coating has a coating thickness of at least 50 *µ*m.

2. The anti-corrosion coating as claimed in claim 1, **characterized in that** the alkoxysilane precursor is methyltriethoxysilane and/or tetraethoxyorthosilicate and/or tetramethoxyorthosilicate and/or methyltrimethoxysilane and/or dimethyldiethoxysilane and/or phenyltriethoxysilane.

3. The anti-corrosion coating as claimed in claim 1 or claim 2, **characterized in that** the high-density protective coating contains up to 20% by weight of adhesion promoter.

4. The anti-corrosion coating as claimed in one of claims 1 to 3, **characterized in that** the high-density protective coating contains up to 22.5% by weight of particulate material.

5. The anti-corrosion coating as claimed in claim 3 or claim 4, **characterized in that** the adhesion promoter is 3-glycidyloxypropyltriethoxysilane and/or 3-glycidyloxypropyltrimethoxysilane and/or 3-glycidoxypropylmethyldiethoxysilane and/or 3-glycidoxypropylmethyldimethoxysilane and/or 2-(3,4-epoxycyclohexyl)ethyltrimethoxysilane and/or 2-(3,4-epoxycyclohexyl)-ethyltriethoxysilane and/or 3-aminopropyltriethoxysilane and/or 3-aminopropylmethyldiethoxysilane and/or aminopropyltrimethoxysilane and/or (3-trimethoxysilylpropyl)diethylentriamine and/or aminoethylaminopropyltrimethoxysilane and/or aminoethylaminopropyltriethoxysilane and/or aminoethylaminopropylmethyldimethoxysilane.

6. The anti-corrosion coating as claimed in one of the preceding claims, **characterized in that** the anti-corrosion coating comprises a porous coating system with open pores 1 to 200 µm in size, wherein the porous coating system is applied to the high-density protective coating, wherein the porous coating system is formed from cross-linked alkoxysilane precursors, and anti-MIC organisms colonize the pores.

7. The anti-corrosion coating as claimed in claim 6, **characterized in that** a porous top coat formed from cross-linked alkoxysilane precursors is applied to the porous coating system, wherein the porous top coat comprises pores with a pore diameter of less than 5 µm.

8. A method for producing an anti-corrosion coating with a high-density protective coating on a substrate which is prone to corrosion, comprising the following steps:
a) providing an anti-corrosion protection formulation wherein at least one coat-forming alkoxysilane precursor is reacted, without the addition of solvents, by adding water in a molar ratio of 3:1 to 1:1, under acidic pH conditions and at a temperature in the range 0°C to 10°C, in order to form a pre-condensed coat-forming alkoxysilane precursor,
b) applying the anti-corrosion protection formulation to a substrate, and
c) curing the applied anti-corrosion protection formulation to form a high-density protective coating.

9. The method as claimed in claim 8, **characterized in that** the acidic pH conditions for the production of a high-density protective coating are adjusted by adding hydrochloric acid, nitric acid, phosphoric acid or acetic acid as the acidic catalyst.

10. The method as claimed in claim 9 or claim 10, **characterized in that** the triethoxysilane precursor used is methyltriethoxysilane and/or tetraethoxyorthosilicate and/or tetramethoxyorthosilicate and/or methyltrimethoxysilane and/or dimethyldiethoxysilane and/or phenyltriethoxysilane.

11. The method as claimed in one of claims 8 to 10, **characterized in that** the anticorrosion protection formulation is applied by dip coating, drop application, trowelling or brush application.

12. The method as claimed in one of claims 8 to 11, **characterized in that** prior to application, the anti-corrosion protection formulation is mixed directly with spores of anti-MIC organisms.

13. The method as claimed in one of claims 8 to 12, **characterized in that** the anti-corrosion protection formulation is cured by means of thermal curing at a temperature between 60°C and 200°C to form a high-density protective coating.

14. The method as claimed in one of claims 8 to 12, **characterized in that** the anti-corrosion protection formulation is cured by means of chemically initiated curing by adding bases to a high-density protective coating.

15. The method as claimed in one of claims 8 to 14, **characterized in that** the anti-corrosion protection formulation is applied by means of spray coating in an atomized spray.

16. The method as claimed in one of claims 8 to 15, **characterized in that** a porous coating system is applied to the protective coating by means of the following steps:
a) providing a formulation for the porous coating system wherein an ammoniacal solution is added to at least one coat-forming alkoxysilane precursor without the addition of solvents, adding water in a molar ratio of 1:1 to 1:3, at ambient temperature and with stirring,
b) applying the formulation for the porous coating system to the protective coating and
c) curing the applied formulation for the porous coating system.

17. The method as claimed in claim 16, **characterized in that** prior to application, the formulation for the porous coating system is mixed directly with anti-MIC organisms.

18. The method as claimed in claim 16, **characterized in that** after curing the formulation for the porous coating system, a bacterial suspension is applied to the porous coating system.

19. The method as claimed in one of claims 16 to 18, **characterized in that** a porous top coat is applied to the porous coating system by means of the following steps:
a) acidifying the formulation for the porous coating system as defined in step a) in claim 16,
b) applying the formulation for the porous top coat to the porous coating system, and
c) curing the applied formulation to form the porous top coat.

20. A solvent-free anti-corrosion protection formulation for the manufacture of an anti-corrosion coating according to claim 1, containing at least one pre-condensed coat-forming alkoxysilane precursor, wherein the molecules of the pre-condensed coat-forming alkoxysilane precursors are linear and built up from monomer units of the applied alkoxysilane precursor, obtained by reacting:
- at least one coat-forming alkoxysilane precursor without the addition of solvents,
- by adding water in a molar ratio of 1:1 to 1:3,
- under acidic pH conditions,
- at a temperature in the range 0°C to 10°C.

21. The solvent-free anti-corrosion protection formulation as claimed in claim 20, **characterized in that** the alkoxysilane precursor is methyltriethoxysilane and/or tetraethoxyorthosilicate and/or tetramethoxyorthosilicate and/or methyltrimethoxysilane and/or dimethyldiethoxysilane and/or phenyltriethoxysilane.

22. The solvent-free anti-corrosion protection formulation as claimed in claim 20 or claim 21, **characterized in that** after mixing all of the individual components and subsequent formation of the pre-condensed coat-forming alkoxysilane precursors, the volatile components of the formulation are removed from the anti-corrosion protection formulation.

23. An anti-corrosion protection formulation comprising:
a) a solvent-free anti-corrosion protection formulation under acidic conditions as defined in one of claims 20 to 22 as component A, and
b) a component B containing a base, for chemically initiated curing.

24. The anti-corrosion protection formulation as claimed in claim 23, **characterized in that** the proportion by volume of the base in the component B is preferably 1% to 50% by volume.

25. The anti-corrosion protection formulation as claimed in claim 23 or claim 24, **characterized in that** the base for component B is an ammonium hydroxide solution, an amino-functionalized alkoxysilane, a basic amino acid or a primary, secondary or tertiary amine.

## Revendications

1. Couche anticorrosion destinée à protéger contre la corrosion, comprenant une couche de protection de haute densité avec une faible densité de défauts, sans fissures, agglomérats ou pores millimétriques ou micrométriques, sur un substrat vulnérable à la corrosion, contenant des précurseurs d'alcoxysilane précondensés filmogènes, dans laquelle les molécules de précurseurs d'alcoxysilane précondensés filmogènes sont linéaires à chaîne courte et sont constituées d'unités monomères du précurseur d'alcoxysilane utilisé et comportent des groupes hydroxyles réactifs résiduels ou des groupes alcoxy hydrolysables résiduels, dans laquelle les molécules de précurseurs d'alcoxysilane précondensés filmogènes sont réticulés les unes aux autres, dans laquelle la couche anticorrosion possède une épaisseur d'au moins 50 µm.

2. Couche anticorrosion selon la revendication 1, **caractérisée en ce que** le précurseur d'alcoxysilane est le méthyltriéthoxysilane et/ou le tétraéthoxyorthosilicate et/ou le tétraméthoxyorthosilicate et/ou le méthyltriméthoxysilane et/ou le diméthyldiéthoxysilane et/ou le phényltriéthoxysilane.

3. Couche anticorrosion selon la revendication 1 ou 2, **caractérisée en ce que** la couche de protection de haute densité contient jusqu'à 20 % en poids de promoteur d'adhésion.

4. Couche anticorrosion selon l'une des revendications 1 à 3, **caractérisée en ce que** la couche de protection de haute densité contient jusqu'à 22,5 % en poids de matériau particulaire.

5. Couche anticorrosion selon la revendication 3 ou 4, **caractérisée en ce que** le promoteur d'adhésion est le 3-glycidyloxypropyltriéthoxysilane et/ou le 3-glycidyloxypropyltriméthoxysilane et/ou le 3-glycidoxypropylméthyldiéthoxysilane et/ou le 3-glycidoxypropylméthyldiméthoxysilane et/ou le 2-(3,4-époxycyclohexyl)éthyltriméthoxysilane et/ou le 2-(3,4-époxycyclohexyl)-éthyltriéthoxysilane et/ou le 3-aminopropyltriéthoxysilane et/ou le 3-aminopropylméthyldiéthoxysilane et/ou l'aminopropyltriméthoxysilane et/ou la (3-triméthoxysilylpropyl)diéthylènetriamine et/ou l'aminoéthylaminopropyltriméthoxysilane et/ou l'aminoéthylaminopropyltriéthoxysilane et/ou l'aminoéthylaminopropylméthyldiméthoxysilane.

6. Couche anticorrosion selon l'une des revendications précédentes, **caractérisée en ce que** la couche de protection comporte un système de couche poreuse avec une ouverture des pores comprise entre 1 et 200 µm, dans laquelle le système de couche poreuse est déposé sur la couche de protection à haute densité, dans laquelle le système de couche poreuse est constitué de précurseurs d'alcoxysilane et dont les pores contiennent des organismes anti-corrosion microbienne.

7. Couche anticorrosion selon la revendication 6, **caractérisée en ce qu'**une couche de couverture poreuse constituée de précurseurs d'alcoxysilane est appliquée sur le système de couche poreuse, dans laquelle la couche de couverture poreuse comporte des pores d'un diamètre inférieur à 5 µm.

8. Procédé de fabrication d'une couche anticorrosion dotée d'une couche de protection de haute densité sur un substrat vulnérable à la corrosion, comprenant les étapes :
a) fournir une formulation de protection anticorrosion, dans lequel au moins un précurseur d'alcoxysilane est converti en un précurseur d'alcoxysilane précondensé filmogène, sans solvant additionnel, par ajout d'eau dans un ratio molaire compris entre 3:1 et 1:1 en conditions de pH acide à une température dans un intervalle comprise entre 0 et 10 °C,
b) application de la formulation de protection anticorrosion sur un substrat et
c) durcissement de la formulation de protection anticorrosion en une couche de protection de haute densité.

9. Procédé selon la revendication 8, **caractérisé en ce que** les conditions de pH acide pour l'obtention d'une couche de protection de haute densité sont obtenues par l'ajout d'acide chlorhydrique, d'acide nitrique, d'acide phosphorique ou d'acide acétique comme catalyseur acide.

10. Procédé selon la revendication 8 ou 9, **caractérisé en ce qu'**on utilise, comme précurseur du triéthoxysilane, le méthyltriéthoxysilane et/ou le tétraéthoxyorthosilicate et/ou le tétraméthoxyorthosilicate et/ou le méthyltriméthoxysilane et/ou le diméthyldiéthoxysilane et/ou le phényltriéthoxysilane.

11. Procédé selon l'une des revendications 8 à 10, **caractérisé en ce que** la formulation de protection anticorrosion est appliquée par revêtement au trempé, par gouttage, par enduction à la spatule ou au pinceau.

12. Procédé selon l'une des revendications 8 à 11, **caractérisé en ce que** la formulation de protection anticorrosion est mélangée directement à des spores d'organismes anti-corrosion microbienne.

13. Procédé selon l'une des revendications 8 à 12, **caractérisé en ce que** la formulation de protection anticorrosion est durcie en couche de protection de haute densité au moyen d'un durcissement thermique à une température comprise entre 60 et 200 °C.

14. Procédé selon l'une des revendications 8 à 12, **caractérisé en ce que** la formulation de protection anticorrosion est durcie en couche de protection de haute densité au moyen d'un durcissement à initiation chimique par ajout de bases.

15. Procédé selon l'une des revendications 8 à 14, **caractérisé en ce que** la formulation de protection anticorrosion est appliquée par pulvérisation en brouillard pulvérisé.

16. Procédé selon l'une des revendications 8 à 15, **caractérisé en ce qu'**un système de couche poreuse est déposé sur la couche de protection, comprenant les étapes suivantes :
a) préparation d'une formulation pour le système de couche poreuse, dans lequel au moins un précurseur d'alcoxysilane est agité avec de l'ammoniaque, sans solvants additionnels, par ajout d'eau dans un ratio molaire compris entre 1:1 et 1:3 à température ambiante,
b) application de la formulation pour le système de couche poreuse sur la couche de protection et
c) durcissement de la formulation pour le système de couche poreuse.

17. Procédé selon la revendication 16, **caractérisé en ce que** la formulation pour le système de couche poreuse est mélangée directement à des organismes anti-corrosion microbienne préalablement à l'application.

18. Procédé selon la revendication 16, **caractérisé en ce qu'**après le durcissement de la formulation pour le système de couche poreuse, une suspension bactérienne est appliquée sur le système de couche poreuse.

19. Procédé selon l'une des revendications 16 à 18, **caractérisé en ce qu'**une couche de couverture poreuse est appliquée sur le système de couche poreuse, comprenant les étapes suivantes :
a) acidification de la formulation pour le système de couche poreuse définie selon l'étape a) dans la revendication 16,
b) application de la formulation pour la couche de couverture poreuse sur le système de couche poreuse et
c) durcissement de la formulation pour la couche de couverture poreuse.

20. Formulation de couche anticorrosion sans solvant pour la fabrication d'une couche anticorrosion selon la revendication 1, contenant au moins un précurseur d'alcoxysilane précondensé filmogène, dans laquelle les molécules de précurseurs d'alcoxysilane précondensés filmogènes sont linéaires et sont constituées d'unités monomères du précurseur d'alcoxysilane utilisé et sont obtenues par mise en oeuvre :
- d'au moins un précurseur d'alcoxysilane filmogène sans solvants additionnels,
- par ajout d'eau dans un ratio molaire compris entre 1:1 et 1:3,
- dans des conditions de pH acide
- à une température dans un intervalle comprise entre 0 et 10 °C.

21. Formulation de couche anticorrosion sans solvant selon la revendication 20, **caractérisée en ce que** le précurseur d'alcoxysilane est le méthyltriéthoxysilane et/ou le tétraéthoxyorthosilicate et/ou le tétraméthoxyorthosilicate et/ou le méthyltriméthoxysilane et/ou le diméthyldiéthoxysilane et/ou le phényltriéthoxysilane.

22. Formulation de couche anticorrosion sans solvant selon la revendication 20 ou 21, **caractérisée en ce que** les composants volatils de la formulation de couche anticorrosion sont évaporés après le mélange de tous les composants individuels et la formation totale des précurseurs d'alcoxysilane précondensés filmogènes.

23. Formulation de couche anticorrosion, contenant
a) une formulation de couche anticorrosion sans solvant en conditions de pH acide, définie par une revendications 20 à 22 en tant que composant A et
b) un composant B pour le durcissement par initiation chimique, contenant une base.

24. Formulation de couche anticorrosion selon la revendication 23, **caractérisée en ce que** la fraction volumique de la base dans le composant B est de préférence comprise entre 1 et 50 % (v/v).

25. Formulation de couche anticorrosion selon la revendication 23 ou 24, **caractérisée en ce que** la base du composant B est une solution d'hydroxyde d'ammonium, un alcoxysilane aminofonctionnalisé, un acide aminé basique ou une amine primaire, secondaire ou tertiaire.
